Europäisches Patentamt

(19) European Patent Office

Office européen des brevets

(11) Numéro de publication : **0 097 555**
**B1**

(12) **FASCICULE DE BREVET EUROPÉEN**

(45) Date de publication du fascicule du brevet :
11.02.87

(51) Int. Cl.⁴ : **G 06 K 9/38**, G 06 K 11/00

(21) Numéro de dépôt : 83401100.9

(22) Date de dépôt : 31.05.83

(54) **Système de saisie de données inscrites sur un support.**

(30) Priorité : 04.06.82 FR 8209749

(43) Date de publication de la demande :
04.01.84 Bulletin 84/01

(45) Mention de la délivrance du brevet :
11.02.87 Bulletin 87/07

(84) Etats contractants désignés :
DE GB NL

(56) Documents cités :
US-A- 3 820 068
US-A- 3 845 319
US-A- 3 852 590
US-A- 3 872 434
US-A- 4 149 143
US-A- 4 157 533
PROCEEDINGS OF THE NAT. ELECTR. CONF., vol. 35, octobre 1981, pages 483-486, Oak Brook, Ill., USA R.M. LUM et al.: "Automatic curve digitizer and image analyzer"
REVIEW OF SCIENTIFIC INSTRUMENTS, vol. 51, no. 7, juillet 1980, pages 954-958, New York, USA R.M. LUM et al.: "Microcomputer-controlled digitizer and image analyzer"

(73) Titulaire : **CENTRE NATIONAL DE LA RECHERCHE SCIENTIFIQUE (CNRS)**
**15, Quai Anatole France**
**F-75007 Paris (FR)**

(72) Inventeur : **Chevalet, Jean**
**42, Boulevard de la Tour Maubourg**
**F-75007 Paris (FR)**
Inventeur : **Reeves, Robert**
**3, rue de la Rotonde Voisin le Bretonneux**
**F-78180 Montigny le Bretonneux (FR)**

(74) Mandataire : **Mongrédien, André et al**
**c/o BREVATOME 25, rue de Ponthieu**
**F-75008 Paris (FR)**

EP 0 097 555 B1

Jouve, 18, rue St-Denis, 75001 Paris, France

## Description

La présente invention concerne un système de saisie de données inscrites sur un support. Elle s'applique plus particulièrement à la saisie de données graphiques telles que des caractères, des courbes ou toutes sortes de tracés présents sur un support réfléchissant ou transparent, ces données étant monochromatiques ou polychromatiques. Le système de l'invention permet de numériser des données graphiques repérées sur un support. Elle peut aussi permettre la saisie de données en photométrie, densitométrie... etc.

Il est possible de classer en deux catégories les systèmes connus permettant de saisir et de numériser des données graphiques : dans une première catégorie, on trouve des systèmes du type caméra de télévision. Ces systèmes agissent par balayage de la zone contenant les données à saisir. Ils comprennent généralement un ensemble de numérisation relié au circuit de balayage de la caméra. Leur résolution n'est pas très élevée. Les systèmes de la seconde catégorie comprennent un « stylo » qui permet de pointer les données d'un dessin disposé sur une table munie d'une matrice de fils ou de tout autre système qui permet de quadriller la zone contenant les données graphiques à saisir, leurs coordonnées sont obtenues à partir des variations de champ électromagnétique provoquées dans la matrice de fils par le pointeur ; ces coordonnées sont ensuite transférées, sous contrôle humain, vers un ordinateur. Pour les systèmes de cette seconde catégorie, la numérisation des données graphiques n'est pas du tout automatique, elle peut comporter des erreurs très importantes, dues par exemple au paralaxe du pointage à l'aide du stylo ; de plus, avec ces systèmes, la saisie des données graphiques est longue, pénible et très coûteuse. Les systèmes de cette seconde catégorie ne peuvent fournir des informations numériques relatives aux intensités des radiations électromagnétiques émises par les données à saisir.

On connaît aussi des systèmes tels que décrits dans la revue « PROCEEDINGS OF THE NAT. ELECTR. CONF. », vol. 35, octobre 1981, pages 483-486, RM. LUM et al. : « Automatic curve digitizer and image analyzer », et dans la revue « REVIEW OF SCIENTIFIC INSTRUMENTS », vol. 51, No. 7, juillet 1980, pages 954-958, RM. LUM et al. : « Microcomputer-controlled digitizer and image analyzer ».

Ces revues décrivent des systèmes de saisie de données inscrites sur un support. Ces systèmes comprennent des moyens de détection (photodétecteurs) fournissant des signaux analogiques dont les amplitudes dépendent des intensités de radiations, des moyens pour déplacer le photodétecteur, des moyens de commande et de traitement des signaux de détection comprenant un processeur et une mémoire reliés aux moyens pour déplacer le photodétecteur, et des moyens de conversion analogique-numérique recevant lesdits signaux analogiques pour fournir sur une sortie, des valeurs numériques correspondant auxdites amplitudes. Ces systèmes ont pour inconvénient, notamment à cause de la conception des moyens de commande et de traitement, de ne pas permettre une saisie rapide et précise des données à numériser.

La présente invention a pour but de remédier à ces inconvénients et notamment de réaliser un système de saisie de données graphiques, qui permet de saisir et de numériser des données monochromes ou polychromes, de manière automatique, avec une très grande précision, non seulement sur les emplacements de ces données dans une zone déterminée, mais aussi sur les intensités des radiations électromagnétiques émises par ces données. L'invention a aussi pour but de réaliser un système de saisie de données graphiques présentant une très bonne résolution.

L'invention a pour objet un système de saisie de données inscrites sur un support comportant des moyens de détection sensibles à différentes intensités de radiations électromagnétiques, de longueurs d'ondes prédéterminées, provenant de données inscrites sur un support, ces moyens de détection fournissant sur des sorties, des signaux analogiques dont les amplitudes dépendent respectivement des intensités de radiations, des moyens pour déplacer les moyens de détection au moins dans une zone contenant les données à saisir, des moyens de commande et de traitement comprenant un processeur relié aux moyens pour déplacer les moyens de détection et à une mémoire, des moyens de conversion analogique-numérique recevant lesdits signaux analogiques au cours du déplacement des moyens de détection pour fournir sur une sortie des valeurs numériques correspondant respectivement auxdites amplitudes, la mémoire contenant des instructions de commande des moyens pour déplacer les moyens de détection par rapport à un repère fixe de coordonnées, et des instructions de traitement et d'adressage desdites valeurs numériques en relation avec les coordonnées des données, les moyens de détection comprenant au moins une cellule photosensible médiane et deux cellules photosensibles de part et d'autre de cette cellule médiane, et des amplificateurs de sortie respectivement reliés à des sorties des cellules pour fournir sur des sorties d'amplification lesdits signaux analogiques, caractérisé en ce que les moyens de conversion analogique-numérique comprennent un multiplexeur relié aux sorties des amplificateurs de sortie, un convertisseur analogique-numérique relié à des sorties du multiplexeur, le système comprenant en outre des moyens de comparaison à sorties logiques reliées aux amplificateurs de sortie et recevant des valeurs d'amplitude moyenne de référence de comparaison, pour comparer les valeurs instantanées desdites amplitudes des signaux analogiques, avec des valeurs d'amplitude moyenne de référence de comparaison, au cours du déplacement des cellules, des états ou changements d'états logiques des signaux fournis par les sorties de ces moyens de comparaison étant représentatifs des transitions instantanées d'intensités des radiations, provoquées par la saisie des données par les cellules au cours de leurs déplacements, les amplitudes de référence de comparaison étant déterminées par le processeur au cours d'un déplacement des cellules permettant un balayage préalable de la zone contenant les données à saisir à partir des amplitudes des signaux fournis respectivement par les amplificateurs de sortie au cours du balayage préalable, tous les signaux de sortie du multiplexeur étant appliqués au convertisseur analogique-numérique dans un fonctionnement dit « qualitatif » du système, les moyens de conversion comprenant aussi des moyens programmables d'amplification des amplitudes des signaux analogiques fournis par l'amplificateur de sortie correspondant à la cellule médiane, ces moyens programmables n'intervenant que pour un fonctionnement dit « quantitatif » du système, l'amplification étant effectuée à partir d'une amplitude prédéterminée de référence d'amplification, pour les signaux analogiques correspondant à la seule cellule médiane 3, le gain des moyens d'amplification étant programmable par le processeur et dépendant d'une échelle souhaitée de valeurs numériques en sortie du convertisseur analogique-numérique 13, pour les signaux analogiques correspondant à la cellule médiane, l'amplitude de référence d'amplification étant déterminée au cours du balayage préalable, seuls les signaux de sortie du multiplexeur qui correspondent aux signaux de la cellule médiane, amplifiés par les moyens programmables, étant appliqués au convertisseur analogique-numérique au cours de ce fonctionnement « quantitatif ».

Selon un mode de réalisation de l'invention, les moyens programmables d'amplification comprennent un comparateur analogique recevant sur une entrée un signal présentant ladite amplitude prédéterminée de référence d'amplification, et sur une autre entrée, les signaux analogiques fournis par l'amplificateur de sortie de la cellule médiane au cours des déplacements dans ladite zone, un amplificateur à gain programmable prédéterminé par le processeur, une entrée de cet amplificateur étant reliée à une sortie du comparateur analogique, une sortie de cet amplificateur étant reliée à une entrée du multiplexeur pour commuter les signaux amplifiés correspondants à la cellule médiane, vers le convertisseur analogique-numérique.

Selon un autre mode de réalisation de l'invention, les moyens de comparaison à sorties logiques comprennent pour chaque amplificateur de sortie, un convertisseur numérique-analogique recevant sur une entrée une valeur numérique de référence de comparaison fournie par le processeur, cette valeur numérique correspondant à l'amplitude moyenne de référence de comparaison, pour les signaux analogiques fournis par l'amplificateur de sortie correspondant, un comparateur à deux entrées, une entrée de ce comparateur étant reliée à la sortie du convertisseur numérique-analogique correspondant pour recevoir un signal analogique dont l'amplitude correspond à la valeur numérique de référence de comparaison, une autre entrée de ce comparateur étant reliée à la sortie de l'amplificateur de sortie correspondant, chaque comparateur fournissant sur une sortie, un signal logique dont les deux états sont représentatifs des états caractéristiques d'intensités des radiations émises par les données graphiques et détectées par la cellule correspondante, ces états étant détectés au cours de la saisie des données et indiquant respectivement si l'amplitude du signal fourni par l'amplificateur de sortie de cette cellule est supérieure ou inférieure à l'amplitude moyenne de référence de comparaison pour cette cellule.

Selon un autre mode de réalisation de l'invention, le système comprend en outre des moyens de codage présentant des entrées reliées aux sorties des comparateurs pour former au cours de la saisie des données, des mots représentant des états binaires instantanés des sorties des comparateurs et permettant de repérer les sorties des comparateurs dont les signaux viennent de subir un changement d'état binaire, ces mots étant fournis au processeur par des sorties des moyens de codage.

Selon un autre mode de réalisation de l'invention, les moyens de codage comprennent au moins un registre, les sorties de ce registre formant les sorties des moyens de codage, des entrées de ce registre étant reliées aux sorties des comparateurs, et trois bascules bistables présentant respectivement deux entrées de commande, les entrées des première, deuxième et troisième de ces bascules étant respectivement reliées aux sorties du premier et du deuxième comparateurs, du premier et du troisième comparateurs, du deuxième et du troisième comparateurs, parmi les trois comparateurs des moyens de comparaison.

Selon un autre mode de réalisation de l'invention, le système comprend en outre au moins un compteur présentant une entrée qui est reliée à la sortie du deuxième comparateur correspondant à la cellule médiane pour compter le nombre de changements d'états logiques subis par le signal de sortie de ce comparateur au cours de la saisie des données ou au cours du balayage préalable.

Selon un autre mode de réalisation de l'invention, les sorties du compteur sont reliées au processeur par l'intermédiaire d'un registre.

Selon un autre mode de réalisation de l'invention, le système comprend en outre des moyens d'adressage du multiplexeur, du convertisseur analogique-numérique, de l'amplificateur à gain programmable, des convertisseurs numériques-analogiques, des registres.

Selon un autre mode de réalisation de l'invention, le système comprend en outre au moins des moyens automatiques de remise à zéro présentant des sorties reliées à des entrées de commande des bascules et du compteur, des entrées de ces moyens de remise à zéro étant reliées à des sorties des moyens d'adressage.

Selon un autre mode de réalisation de l'invention, chaque cellule photosensible comprend un émetteur de radiations électromagnétiques et un récepteur photosensible présentant une sortie qui est reliée à une entrée de l'un des amplificateurs de sortie.

Selon un autre mode de réalisation de l'invention, l'émetteur comprend une source de lumière éclairant une fibre optique vers la zone contenant les données à saisir, le récepteur photosensible comprenant un détecteur photosensible et une fibre optique amenant vers le détecteur les radiations électromagnétiques réfléchies sur la zone contenant les données à saisir.

Selon un autre mode de réalisation de l'invention, les cellules photosensibles comprennent un émetteur commun de radiations de lumière blanche et trois récepteurs photosensibles à différentes longueurs d'onde de ces radiations.

Selon un autre mode de réalisation de l'invention, l'émetteur comprend une source de radiations de lumière blanche éclairant une fibre optique dirigée vers la zone contenant les données à saisir, les récepteurs comprenant respectivement un détecteur photosensible et une fibre optique amenant vers le détecteur les radiations réfléchies sur ladite zone, chaque détecteur étant associé à des filtres optiques commutables, sensibles respectivement aux différentes longueurs d'onde.

Selon un autre mode de réalisation de l'invention, les cellules photosensibles comprennent au moins un émetteur commun pouvant émettre sélectivement des radiations à différentes longueurs d'onde, et pour chaque cellule photosensible, un récepteur sensible aux différentes longueurs d'onde et intensités de ces radiations.

Selon un autre mode de réalisation de l'invention, l'émetteur commun comprend au moins une source pouvant émettre par commutation des radiations de différentes longueurs d'onde, cette source éclairant une fibre optique dirigée vers la zone contenant les données à saisir, chaque récepteur comprenant un détecteur photosensible aux différentes longueurs d'onde et une fibre optique amenant vers le détecteur les radiations réfléchies sur ladite zone.

Selon un autre mode de réalisation de l'invention, la mémoire reliée au processeur contient en outre des instructions de commande, des moyens pour déplacer les moyens opto-électroniques en fonction des mots de valeur binaire fournis au processeur par les moyens de codage.

Selon un autre mode de réalisation de l'invention, la mémoire reliée au processeur contient en outre des instructions de commutation des filtres.

Selon un autre mode de réalisation de l'invention, la mémoire reliée au processeur contient en outre des instructions de commutation de la source.

Selon un autre mode de réalisation de l'invention, les fibres optiques sont associées à des moyens de focalisation.

Les caractéristiques et avantages de l'invention ressortiront mieux de la description qui va suivre, donnée en référence aux dessins annexés dans lesquels :

la figure 1 représente schématiquement un système de saisie de données graphiques, conforme à l'invention ;

la figure 2 représente de manière plus détaillée les moyens de conversion analogique-numérique et les moyens de comparaison utilisés dans le système de l'invention ;

la figure 3 représente de manière plus détaillée les moyens de codage et les moyens de comptage utilisés dans le système de l'invention ;

les figures 4A et 4B représentent des moyens d'adressage et de remise à zéro utilisés dans le système de l'invention ;

la figure 5 est un chronogramme de signaux apparaissant sur les sorties de certains des éléments des moyens d'adressage et de remise à zéro ;

la figure 6 est un schéma qui permet de mieux comprendre le fonctionnement du système de l'invention, lorsque les moyens opto-électroniques sont en regard d'une courbe C ;

la figure 7 est un tableau qui permet de mieux comprendre le rôle des signaux de transition dans le système de l'invention ;

la figure 8 représente le contenu d'un registre des moyens de codage contenant un mot binaire représentatif de transitions caractéristiques de certains signaux dans le système de l'invention ;

la figure 9 est un organigramme représentant les phases de réglage du système de l'invention ;

la figure 10 est un organigramme représentant les principales opérations effectuées par le système de l'invention au cours de la saisie de données graphiques constituées par une courbe ;

la figure 11 représente schématiquement un premier mode de réalisation des moyens opto-électroniques utilisés dans le système de l'invention ; et

la figure 12 représente schématiquement un deuxième mode de réalisation des moyens opto-électroniques utilisés dans le système de l'invention.

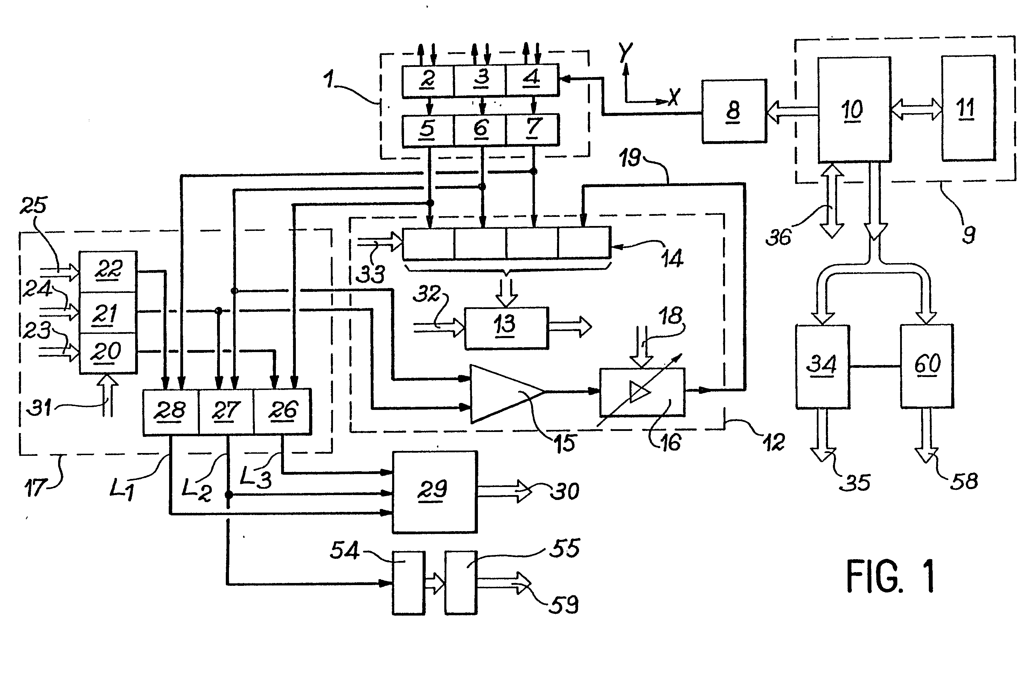

La figure 1 représente schématiquement un système de saisie de données graphiques, conforme à l'invention. Ce système comprend des moyens de détection 1, sensibles à différentes intensités de radiations électro-magnétiques de longueurs d'onde prédéterminées, provenant de données graphiques présentes sur un support non représenté, tel qu'une feuille de papier par exemple. Dans un mode préféré de réalisation de l'invention, les moyens de détection sont des moyens opto-électroniques qui comprennent des cellules photosensibles 2, 3, 4 ; ils seront décrits plus loin en détail ; les sorties de ces cellules sont reliées respectivement aux entrées d'amplificateurs de sortie 5, 6, 7 ; les sorties des amplificateurs 5, 6, 7 fournissent des signaux analogiques dont les amplitudes dépendent respectivement des intensités des radiations émises par les données graphiques à saisir. Le système comprend aussi des moyens 8, qui ne sont pas représentés en détail sur la figure (ces moyens étant bien connus dans l'état de la technique), pour déplacer les moyens opto-électroniques 1, au moins en regard d'une zone contenant les données à saisir, parallèlement à l'un des deux axes X, Y d'un repère fixe de coordonnées. Le système comprend aussi des moyens 9 de commande et de traitement comprenant un processeur 10 relié aux moyens de déplacement 8 ainsi qu'à une mémoire 11. Des moyens de conversion analogiques-numériques 12 reçoivent les signaux analogiques fournis par les moyens opto-électroniques, au cours des déplacements de ces moyens opto-électroniques 1. Ces moyens de conversion analogiques-numériques fournissent au processeur des valeurs numériques correspondant aux amplitudes de ces signaux analogiques reçus. La mémoire 11 reliée au processeur 10 contient, notamment, des instructions de commande des moyens de déplacement 8 de manière que le déplacement des moyens opto-électroniques soit repéré dans le repère fixe des coordonnées et qu'il soit effectué parallèlement à l'un ou l'autre des deux axes X, Y de ce repère fixe. La mémoire 11 contient aussi des instructions de traitement et d'adressage qui seront décrites plus loin en détail ; ces instructions permettent au processeur, notamment, de traiter et d'adresser des valeurs numériques recueillies sur les sorties des moyens de conversion analogiques-numériques 12, en relation avec des coordonnées des données à saisir dans le repère fixe choisi.

Les moyens de conversion analogiques-numériques 12 comprennent un convertisseur analogique-numérique 13 dont les sorties sont reliées au processeur 10 et, des moyens programmables constitués, comme on le verra plus loin en détail, par un multiplexeur analogique 14, un comparateur analogique 15, et un amplificateur à gain programmable 16. Ces moyens d'amplification programmable permettent d'adapter à l'échelle d'entrée du convertisseur analogique-numérique 13, les amplitudes des signaux fournis à ce convertisseur analogique-numérique ; cette adaptation est effectuée de part et d'autre d'une amplitude moyenne prédéterminée de référence d'amplification, qui sera décrite plus loin en détail. Le gain des moyens d'amplification, programmable par le processeur 10, dépend de l'échelle souhaitée des valeurs numériques recueillies en sortie du convertisseur analogique-numérique 13. Le système comprend aussi des moyens de comparaison 17, à sorties logiques, pour comparer les valeurs instantanées des amplitudes des signaux fournis par les moyens opto-électroniques, avec des valeurs d'amplitudes moyennes de référence de comparaison au cours des déplacements des moyens opto-électroniques. Les changements d'états logiques des signaux fournis par les moyens de comparaison 17 sont représentatifs, comme on le verra plus loin en détail, de transitions caractéristiques instantanées dans les intensités des radiations provenant des données graphiques.

Les moyens de détection 1, de type opto-électronique dans l'exemple considéré comprennent une cellule photosensible médiane 3 et deux cellules photosensibles 2, 4 par exemple alignées avec la cellule médiane et disposées de part et d'autre de celle-ci, par exemple symétriquement par rapport à celle-ci. Ces cellules peuvent être alignées, comme on le verra plus tard, parallèlement à l'un des axes X ou Y du repère fixe de coordonnées. Les amplitudes de référence d'amplification et de référence de comparaison sont déterminées au cours d'un déplacement des moyens opto-électroniques permettant un balayage préalable de reconnaissance de la zone contenant les données à saisir.

Le mutiplexeur analogique 14 présente des entrées qui sont respectivement reliées aux sorties des amplificateurs de sortie 5, 6, 7, ainsi qu'une entrée 19 qui est reliée à une sortie de l'amplificateur programmable 16. Cet amplificateur programmable est relié par une entrée à une sortie du comparateur analogique 15. Ce comparateur reçoit sur une entrée un signal qui sera décrit plus loin en détail et qui présente l'amplitude de référence d'amplification mentionnée plus haut ; il reçoit sur une autre entrée les signaux analogiques fournis par l'amplificateur 6 correspondant à la cellule médiane au cours de déplacements des moyens opto-électroniques en regard de la zone comportant les données graphiques à saisir. Le gain de l'amplificateur 16 est réglé par des données binaires appliquées par le processeur sur des entrées 18 ; ces données dépendent d'instructions contenues dans la mémoire 11 ; ces instructions interviennent après un calcul de l'amplitude moyenne de référence d'amplifications.

Les amplitudes de référence de comparaison et de référence d'amplification sont obtenues de la manière suivante : pour chacune des cellules photosensibles 2, 3, 4 on enregistre dans la mémoire 11 du processeur 10, toutes les valeurs numériques correspondant aux amplitudes des signaux fournis sur les sorties des amplificateurs de sortie 5, 6, 7. Le processeur établit alors respectivement pour les sorties des amplificateurs 5, 6, 7 des amplitudes de référence. Ces amplitudes seront respectivement, pour les sorties de ces amplificateurs, des amplitudes moyennes de référence de comparaison. L'amplitude de référence d'amplification est établie à l'aide des valeurs numériques maximale et minimale correspondant aux amplitudes maximale et minimale des signaux analogiques recueillies sur la sortie de l'amplificateur 6 au cours du balayage préalable. Selon l'échelle souhaitée des valeurs numériques que l'on désire faire correspondre aux signaux analogiques en sortie du convertisseur analogique-numérique 13, on fixe en conséquence et grâce au processeur 10, le gain de l'amplificateur 16. Le multiplexeur 14 est un multiplexeur analogique qui possède une entrée 19 à laquelle est appliqué le signal de sortie de l'amplificateur 16. Ce multiplexeur permet en fait de commuter chacun des signaux analogiques provenant des amplificateurs de sortie 5, 6, 7 ou provenant de l'amplificateur 16.

Les moyens 17 de comparaison à sorties logiques comprennent, pour chacun des amplificateurs 5, 6, 7 de sortie, un convertisseur numérique-analogique. Ces convertisseurs numériques-analogiques sont représentés en 20, 21, 22 sur la figure. Chaque convertisseur numérique-analogique reçoit sur une entrée une valeur numérique de référence fournie par le processeur 10. Cette valeur numérique correspond à l'amplitude moyenne de référence de comparaison, pour les signaux analogiques fournis par l'amplificateur de sortie correspondant. La valeur numérique appliquée sur l'entrée 23 du convertisseur 20 correspond à l'amplitude moyenne de référence de comparaison, pour les signaux analogiques fournis par l'amplificateur de sortie 5. De la même manière, les valeurs numériques fournies sur les entrées 24 et 25 des convertisseurs 21 et 22 correspondent aux amplitudes moyennes de référence de comparaison, pour les signaux analogiques fournis par les amplificateurs de sortie 6, 7. Les moyens de comparaison 17 comprennent aussi des comparateurs 26, 27, 28 analogiques à sortie logique binaire, compatibles TTL (Transistor-Transistor Logic) correspondant respectivement aux amplificateurs de sortie 5, 6, 7. Chaque comparateur comprend une entrée qui est reliée à la sortie du convertisseur numérique-analogique correspondant, pour recevoir un signal analogique dont l'amplitude correspond à la valeur numérique de référence choisie. C'est ainsi, par exemple, que le comparateur 26 présente une entrée qui est reliée à la sortie du convertisseur numérique analogique 20. Une autre entrée de chaque comparateur est reliée à la sortie de l'amplificateur de sortie correspondant. C'est ainsi par exemple, sur la figure, que l'autre entrée du comparateur 26 est reliée à la sortie de l'amplificateur de sortie 5. Chaque comparateur fournit sur une sortie un signal logique, qui sera décrit plus loin en détail ; l'état de ce signal caractérise l'état d'intensité des radiations émises par les données graphiques et détectées par la cellule correspondante. Ces états sont détectés au cours de la saisie des données graphiques et indiquent respectivement si l'amplitude du signal fourni par l'amplificateur de sortie d'une cellule, est supérieur ou inférieur à l'amplitude moyenne de référence de comparaison pour cette cellule. En fait, le passage de l'état 0 à l'état 1 du signal de sortie d'un comparateur, indique que l'amplitude du signal de sortie de l'amplificateur de sortie correspondant est supérieure à l'amplitude de référence de comparaison pour cet amplificateur. Au contraire, le passage de l'état 1 à l'état 0 du signal de sortie d'un comparateur indique que l'amplitude du signal de sortie de l'amplificateur de sortie correspondant est inférieure à l'amplitude moyenne pour cet amplificateur. Plus précisément, lorsque le système doit par exemple saisir des données graphiques constituées par une courbe de couleur noire sur papier blanc, et si la cellule 2, par exemple, se trouve sur la courbe, le signal de sortie du comparateur 26 correspondant à cette cellule est à l'état 1, tandis que les signaux de sortie des comparateurs 27 et 28 se trouvent à l'état 0. Lorsque les moyens opto-électroniques sont alors déplacés parallèlement à X ou Y, de sorte que la cellule 3 se trouve alors au-dessus de la courbe, le signal de sortie du comparateur 26 passe à l'état 0, le signal de sortie du comparateur 28 reste inchangé tandis que le signal de sortie du comparateur 27 correspondant à la cellule 3 passe à l'état 1. Il en résulte que les signaux de sortie des comparateurs 26, 27, 28 sont bien représentatifs de transitions caractéristiques d'intensités des radiations émises par les données graphiques et détectées par les cellules opto-électroniques. Dans le cas de l'exemple considéré, les amplitudes moyennes de référence de comparaison qui ont été préétablies au cours d'un balayage exploratoire, pour les signaux de sortie de chaque amplificateur de sortie, sont des seuils ; ces seuils présentent la délimitation entre les radiations noires émises par la courbe et les radiations de couleur blanche émises par la feuille de papier sur laquelle cette courbe est tracée.

Le système comprend aussi des moyens de codage 29 présentant des entrées qui sont reliées aux sorties des comparateurs 26, 27, 28. Ces moyens de codage permettent de former, comme on le verra plus loin en détail, au cours de la saisie des données des « mots » de valeurs binaires instantanées ; ils représentent les états binaires instantanés des sorties des comparateurs 26, 27, 28 et permettent aussi de repérer les sorties des comparateurs pour lesquelles les signaux viennent de subir un changement d'état binaire, au cours d'un déplacement des moyens opto-électroniques. Ces « mots » sont fournis au processeur 10 par les sorties 30 des moyens de codage 29. Enfin, on a aussi représenté des moyens de comptage constitués par un compteur 54 et un registre 55 dont les sorties 59 sont reliées au bus 36. Ces moyens seront décrits plus loin. L'entrée 18 de l'amplificateur 16 à gain programmable, les entrées 31 des convertisseurs numériques-analogiques 20, 21, 22, les entrées 32 et 33 du convertisseur analogique-numérique 13 et du multiplexeur 14, sont des entrées d'adressage ; ces entrées sont reliées à des sorties d'adressage 35 de moyens d'adressage 34, qui seront décrits plus loin en détail et qui sont commandés par le processeur 10. On verra plus loin que le système comprend des moyens 60 de remise à zéro de registres et bascule. Les signaux de commande de remise à zéro sont disponibles sur des sorties 58 des moyens 60. Ces moyens de remise à zéro sont commandés par les moyens d'adressage 34, et par le processeur 10.

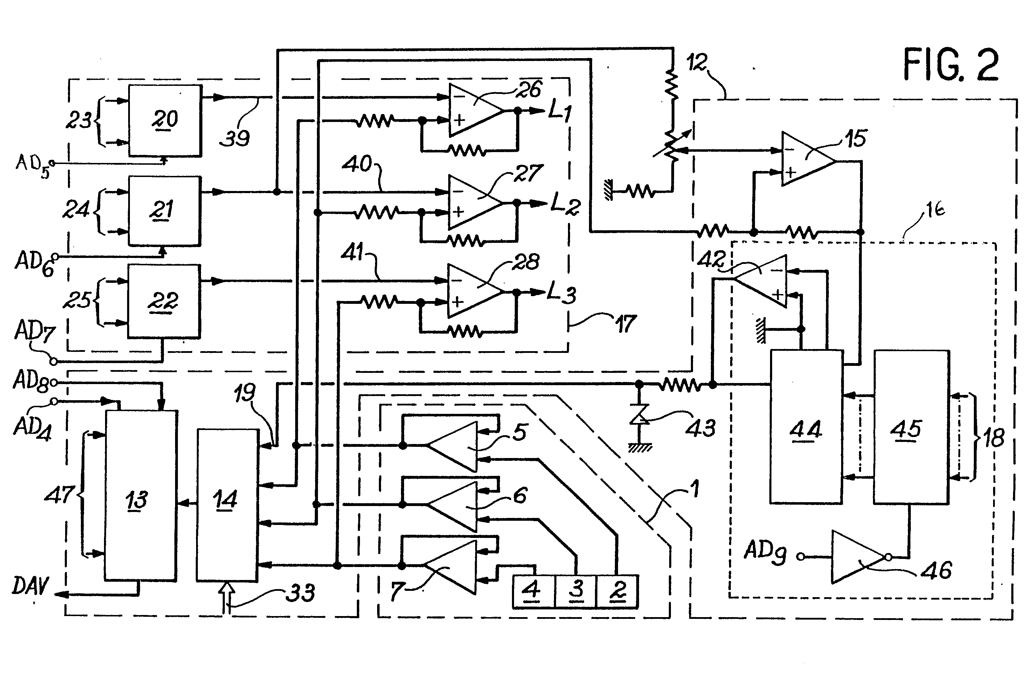

La figure 2 représente de manière plus détaillée les moyens de conversion analogique-numérique 12 et les moyens de comparaison 17. Les convertisseurs numériques-analogiques 20, 21, 22 des moyens de comparaison 17 ne sont pas représentés en détail sur la figure. Leurs entrées sont représentées en 23, 24, 25 ; ces entrées sont reliées à un bus d'interface 36 lié au processeur 10. On a également représenté sur cette figure des entrées d'adressage $AD_5$, $AD_6$, $AD_7$ de ces convertisseurs ; ces entrées sont reliées aux sorties 35 des moyens d'adressage 34 (fig. 1). On n'a pas représenté sur la fig. 2, les circuits de polarisation des convertissseurs. Ces convertisseurs sont par exemple du type $DACUP_8BC$ commercialisés par la Société DATEL. Les sorties des convertisseurs sont respectivement reliées aux entrées 39, 40, 41 des comparateurs 26, 27, 28. Ces comparateurs présentent un léger hystérésis pour éviter les valeurs incertaines ou oscillantes sur leurs sorties $L_1$, $L_2$, $L_3$ qui sont reliées aux entrées des moyens de codage 29 (fig. 1). Ces comparateurs sont des amplificateurs différentiels spécialisés, de type connu, on a représenté sur la figure 2, des résistances non référencées qui permettent de fixer le seuil d'hystérésis (quelques millivolts) compatible avec le niveau de bruit du signal d'entrée. On a représenté en 23, 24, 25, les entrées des convertisseurs numériques-analogiques 20, 21, 22 ; ces entrées représentent en fait huit entrées parallèles pour chaque convertisseur, par exemple. Les moyens d'amplification à gain programmable 16 comprennent notamment, comme on l'a indiqué plus haut, un comparateur analogique 15 de gain unité ; ce comparateur est constitué par un amplificateur différentiel et différentes résistances non référencées sur la figure ; ces résistances permettent de fixer le gain et la polarisation de cet amplificateur différentiel. Les entrées de cet amplificateur différentiel. Les entrées de cet amplificateur 15 sont respectivement reliées à la sortie 40 du convertisseur numérique-analogique correspondant à la cellule opto-électronique médiane 3 et à la sortie de l'amplificateur de sortie 6, correspondant à cette cellule. Chaque amplificateur 5, 6, 7 de sortie comprend aussi un amplificateur différentiel et une contre-réaction, les entrées de ces amplificateurs sont respectivement reliées aux sorties des cellules 2, 3, 4, ces amplificateurs sont des adaptateurs d'impédance. La sortie du comparateur 15 est reliée à une entrée de l'amplificateur 16 à gain programmable. Cet amplificateur comprend en fait un amplificateur opérationnel 42 dont la sortie est reliée par l'intermédiaire d'une résistance non référencée et d'une diode Zener 43 de protection du multiplexeur 14 à l'entrée 19 multiplexeur 14. L'amplificateur 16 à gain programmable, comprend en outre un convertisseur numérique-analogique 44, dont les entrées sont reliées aux sorties d'un registre 45. Le registre 45 est un registre qui comprend huit entrées et huit sorties parallèles ; les entrées 18 sont reliées au bus 36 pour recevoir les données nécessaires à la programmation du gain, le réseau interne du convertisseur 44 est utilisé en contre-réaction par l'amplificateur opérationnel 42, d'où les connexions allant du convertisseur 44 vers les entrées et les sorties de l'amplificateur 42 et la sortie de l'étage amplificateur 15. L'adressage du registre 45 est effectué par un signal AD 9 appliqué sur une entrée de ce registre par l'intermédiaire d'un amplificateur inverseur 46. Le convertisseur 44 est par exemple du type AD 7523 commercialisé par la Société Analog Devices ; le registre 45 est par exemple du type 74 LS 273. En fait, le convertisseur numérique-analogique 44, qui n'est pas représenté en détail sur la figure, est un réseau de résistances de type multiplieur commandé par les données du registre 45 ; il permet de régler le gain de l'amplificateur 42 selon des valeurs allant de 1 à 256.

L'adressage du multiplexeur analogique 14 est effectué sur ses entrées 33 par des données provenant du bus 36. Les sorties 47 du convertisseur analogique-numérique 13 sont reliées au bus pour que le processeur traite et enregistre dans sa mémoire, les valeurs numériques correspondant aux signaux analogiques recueillis sur les sorties des amplificateurs de sortie 5, 6, 7. Le convertisseur analogique-numérique 13 présente en outre des entrées d'adressage $AD_4$ et $AD_8$ correspondant aux entrées d'adressage 32 de la figure 1. Il présente en outre une sortie DAV qui est reliée au processeur 10 et qui permet d'indiquer, à celui-ci, par un signal spécifique, que des valeurs numériques sont disponibles sur les sorties 47. La sortie du multiplexeur 14, est bien entendu reliée à une entrée du convertisseur analogique 13.

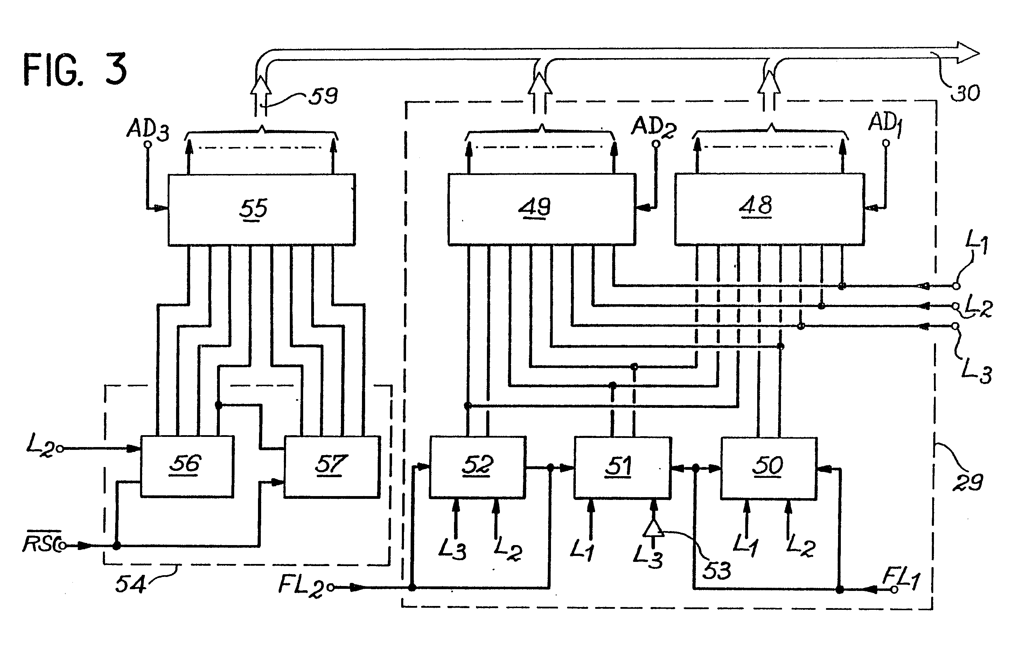

La figure 3 représente de manière plus détaillée les moyens de codage 29 de la figure 1, dont les sorties 30 sont reliées au processeur, par l'intermédiaire du bus 36, pour fournir à ce processeur des mots de valeurs binaires instantanées représentant les états binaires instantanés des sorties $L_1$, $L_2$, $L_3$ des comparateurs 26, 27, 28 ; les sorties 30 des moyens de codage fournissent aussi des valeurs binaires qui permettent de repérer les signaux des sorties des comparateurs 26, 27, 28 qui viennent de subir respectivement un changement d'état binaire, après un déplacement des moyens opto-électroniques 1. Les moyens de codage comprennent au moins un registre à entrées et sorties parallèles, dont les entrées sont reliées aux sorties $L_1$, $L_2$, $L_3$ des comparateurs 26, 27, 28. En fait, dans l'exemple de réalisation représenté sur la figure, les moyens de codage comprennent deux registres 48, 49, à huit entrées et huit sorties parallèles. Les registres 48, 49 sont adressés sur des entrées $AD_1$ et $AD_2$ par des signaux provenant des sorties 35 des moyens d'adressage 34 ; ces moyens seront décrits plus loin en détail. Les registres 48 et 49 sont de type 74 LS 244. Les moyens de codage 29 comprennent aussi trois bascules bistables 50, 51, 52 présentant respectivement deux entrées de commande. Les deux entrées de commande de la bascule 50 sont reliées respectivement aux sorties $L_1$ et $L_2$ des premier et deuxième comparateurs 26, 27 des moyens de comparaison 17 ; l'une des entrées de commande de la deuxième bascule 51, est reliée à la sortie $L_1$ du premier comparateur 26, l'autre entrée de commande de cette bascule est reliée à la sortie $L_3$ du troisième comparateur 28, par l'intermédiaire d'un amplificateur inverseur 53. Enfin, les entrées de commande de la troisième bascule 52, sont reliées respectivement

aux sorties $L_2$, $L_3$ des deuxième et troisième comparateurs 27, 28. Ces bascules comportent des entrées de remise à zéro qui reçoivent des signaux $FL_1$ et $FL_2$ de remise à zéro fournis par des sorties 58 de moyens de remise à zéro 60 (figure 1), ces moyens de remise à zéro seront décrits plus loin en détail. Chaque bascule présente des sorties complémentaires qui sont respectivement reliées à des entrées des registres 48, 49. Pour des raisons que l'on décrira plus loin en détail, la première bascule 50 est sensible aux fronts montant des signaux appliqués sur ses entrées de commande ; les deuxième et troisième bascules 51, 52 sont sensibles aux fronts descendants des signaux appliqués sur leurs entrées de commande. La bascule 50 est une bascule du type 74 LS 74 ; les bascules 51 et 52 sont des bascules du type 74 LS 73.

Le système comprend en outre un compteur 54, une entrée de ce compteur est reliée à la sortie $L_2$ du comparateur 27 qui correspond à la cellule médiane 3 des moyens opto-électroniques 1. Ce compteur déclenche sur un changement d'état et permet d'enregistrer le nombre de changements d'états subis par le signal de sortie du comparateur 27, au cours de la saisie des données ou au cours du balayage préalable. Les sorties 59 de ce compteur sont reliées au bus 36 par l'intermédiaire d'un registre 55, à entrées et sorties parallèles, (huit entrées et huit sorties parallèles par exemple). Le compteur 54 peut être, par exemple, constitué par deux étages de comptage 56, 57, reliés en série. Ces étages de comptage présentent respectivement des entrées de remise à zéro. Cette remise à zéro peut être commandée par un signal RSC provenant des moyens de remise à zéro 60 (figure 1). Les deux étages de comptage sont du type 7493. Le registre 55 est du type 74 LS 244, mentionné plus haut. Ce registre est adressé sur une entrée $AD_3$ par les sorties 35 des moyens d'adressage 34 (figure 1). Le comptage des changements d'états du signal de sortie du comparateur 27 peut être utilisé lorsque les données graphiques à reconnaître sont par exemple les bâtonnets d'un code à bâtonnets, tel qu'un code de chèque bancaire.

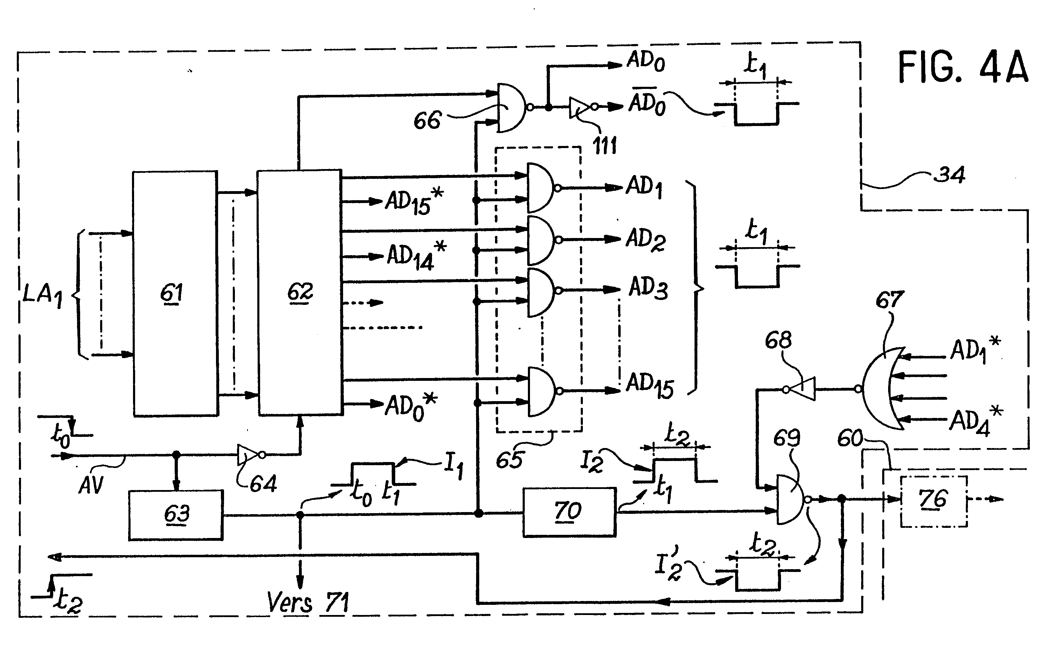

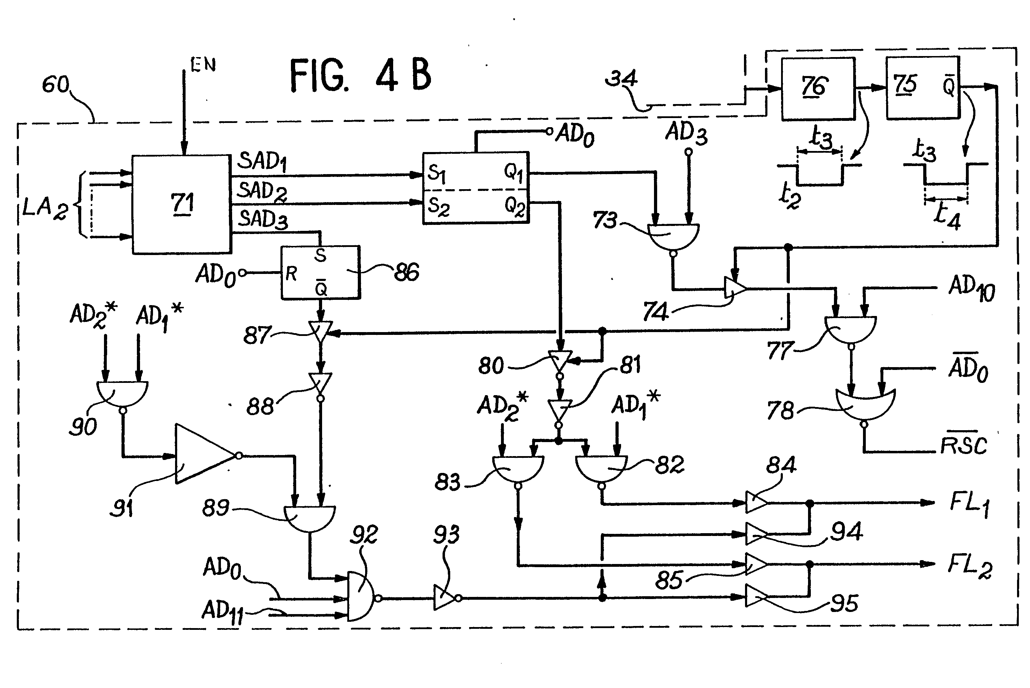

Les figures 4A et 4B représentent les moyens d'adressage 34 et de remise à zéro 60 de la figure 1. Ces moyens d'adressage permettent d'adresser, par des signaux $AD_1$, $AD_2$, $AD_3$ les registres 48, 49, et 55 (figure 3) ; ils permettent aussi d'adresser, par des signaux $AD_4$, $AD_8$, le convertisseur analogique-numérique 13, et par des signaux $AD_5$, $AD_6$, $AD_7$ respectivement, les convertisseurs numériques-analogiques 20, 21, 22 (figure 2). Ces moyens d'adressage permettent enfin d'adresser les moyens d'amplification 16 à gain programmable par un signal $AD_9$ appliqué à l'entrée de l'amplificateur-inverseur 46 (figure 2). Les sorties des moyens d'adressage qui fournissent ces signaux, sont repérées en 35 sur la figure 1.

Les moyens 60 de remise à zéro permettent la remise à zéro du compteur 54, la remise à zéro des bascules 50, 51, 52 (figure 3), respectivement grâce à des signaux $\overline{RSC}$, $FL_1$, $FL_2$. Les sorties des moyens de remise à zéro qui fournissent ces signaux, sont repérées en 58 sur la figure 1.

Les moyens d'adressage 34 comprennent un démultiplexeur 61 dont les entrées $LA_1$ sont reliées à des lignes de contrôle (adresses) provenant du processeur 10. Ce démultiplexeur peut être constitué par deux circuits du type 74 LS 138. Il permet de façon connue, de décoder les adresses fournies par le processeur. Les sorties du démultiplexeur 61 sont reliées aux entrées d'un registre 62 qui permet d'enregistrer, sous forme de niveaux logiques, les adresses décodées par le démultiplexeur. Ces niveaux logiques référencés $AD_0^*$, ..., $AD_{15}^*$ sont disponibles sur les sorties inversées $\overline{Q}$ du registre 62 ; dans cet exemple de réalisation, ce registre comprend seize sorties. Ces niveaux logiques sont transformés en impulsions $AD_1$, $AD_2$, ... $AD_{16}$ par l'intermédiaire d'une bascule monostable 63, d'un amplificateur-inverseur 64 et d'un ensemble de portes ET 65 à sorties inversées. Les deux entrées de chacune de ces portes sont respectivement reliées à la sortie d'une bascule monostable 63 et à la sortie directe Q correspondante du registre 62. La bascule monostable 63 reçoit un signal de validation d'adresse AV (provenant du processeur) qui est également transmis par l'intermédiaire de l'amplificateur-inverseur 64 à l'entrée de commande de chargement LD du registre 62. La bascule monostable 63 fournit en fait l'instant $t_0 = 0$ de réception du signal AV, une impulsion $I_1$ de durée $t_1$. Les impulsions $AD_0$ ... $AD_{15}$ obtenues sur les sorties inversées des portes ET 65, présentent également une durée $t_1$. Le circuit d'adressage comprend aussi une porte ET 66, à sortie inversée ; les deux entrées de cette porte sont reliées respectivement à une sortie du registre 62 et à la sortie de la bascule monostable 63. Cette porte fournit, sur commande du processeur, une impulsion $AD_0$ de durée $t_1$. Cette impulsion permet, comme on le verra plus loin en détail, de commander une remise à zéro générale du système. Les moyens d'adressage 34 comprennent aussi une porte OU 67, à sortie inversée, présentant quatre entrées qui sont reliées respectivement aux sorties du registre 62 et qui fournissent les niveaux d'adresses $AD_1^*$, $AD_2^*$, $AD_3^*$, $AD_4^*$. La sortie inversée de cette porte OU 67 est reliée par l'intermédiaire d'un amplificateur-inverseur 68 à une entrée d'une porte ET 69 à sortie inversée. L'autre entrée de cette porte 69 est reliée à la sortie d'une bascule monostable 70 qui fournit, sur le front descendant de l'impulsion $I_1$, une impulsion $I_2$ de durée $t_2$. La sortie inversée de la porte ET 69 fournit une impulsion inversée $I'_2$ de durée $t_2$ ; cette impulsion comme on le verra plus loin en détail, indique que les valeurs binaires contenues dans les registres 48, 49, 55, et les valeurs contenues dans le convertisseur analogique-numérique 13 peuvent être prises en compte par le processeur.

Le registre 62 est constitué de circuits du type 74 LS 175. Les bascules monostables 63 et 70 sont de type 74 LS 123.

Les moyens de remise à zéro 60 comprennent un démultiplexeur 71 dont les entrées $LA_2$ sont reliées à des lignes de contrôle (adresses) provenant du processeur et dont une entrée de commande EN est reliée à la sortie de la bascule monostable 63. Ce démultiplexeur est du type 74 LS 139. Il fournit sur ses sorties des signaux d'adresses décodées $SAD_1$, $SAD_2$, $SAD_3$. Comme on le verra plus loin en détail, le signal $SAD_1$ permet d'obtenir le signal $\overline{RSC}$ de remise à zéro du compteur 54 (figure 3) ; le signal $SAD_2$ permet d'obtenir l'un ou l'autre des signaux $FL_1$, $FL_2$, de remise à zéro des bascules 50, 51, 52, des moyens de codage 29 (figure 3). Les moyens de remise à zéro comprennent aussi une bascule bistable double 72. Les entrées $S_1$, $S_2$ de cette bascule monostable sont reliées respectivement aux sorties du démultiplexeur 71 qui fournissent les signaux $SAD_1$ et $SAD_2$. Cette bascule comprend aussi une autre entrée susceptible de recevoir le signal $AD_0$ permettant de remettre à zéro l'ensemble des registres et bascules du système. La bascule bistable 72 présente aussi des sorties complémentaires Q et $\overline{Q}$. La sortie Q de la bascule 72 est reliée à l'une des entrées d'une porte ET 73, à sortie inversée ; une autre entrée de cette porte est reliée à la sortie du registre 62 qui fournit le niveau d'adresse $AD_3^*$. La sortie inversée de la porte ET 73 est reliée à une entrée d'une porte 74 à trois états ; cette porte est du type 74 LS 126. Une autre entrée de cette porte est reliée à la sortie complémentaire $\overline{Q}$ d'une bascule monostable 75 ; l'entrée de cette bascule monostable est reliée à la sortie directe Q d'une autre bascule monostable 76. Ces deux bascules monostables 75, 76 sont de même type que les bascules 63 et 70 décrites plus haut. La bascule monostable 76 qui présente un temps d'impulsion est déclenchée par le front montant de l'impulsion $I'_2$ fournie à la sortie inversée de la porte ET 69. La bascule monostable 75 est déclenchée sur le front descendant de l'impulsion fournie par la sortie de la bascule monostable 76, elle présente un temps d'impulsion $t_4$. La sortie de la porte 74 à trois états est reliée à l'entrée d'une porte ET 77, à sortie inversée ; une autre entrée de la porte 77 est reliée à la sortie de l'une des portes ET 65 à sortie inversée, qui fournit le signal $AD_{10}$. Enfin, la sortie inversée de la porte ET 77, est reliée à une entrée d'une porte OU 78 à sortie inversée ; une autre entrée de cette porte OU 78 est reliée à la sortie inversée de la porte ET 66 qui fournit le signal $AD_0$. La sortie inversée de la porte OU 78 est susceptible, dans des conditions qui seront décrites plus tard, de fournir le signal $\overline{RSC}$ de remise à zéro du compteur 54. En fait, l'application du signal $AD_{10}$ sur l'entrée de la porte ET 77, à sortie inversée, permet de remettre uniquement à zéro le compteur 54, tandis que l'application du signal $AD_0$ sur l'une des entrées de la porte OU 78, à sortie inversée, entre dans une procédure permettant la remise à zéro générale de tous les compteurs du système.

La sortie complémentaire $\overline{Q}$ de la bascule bistable double 72 est reliée à une entrée d'une porte 80 à trois états, de type 74 LS 126 par exemple ; une autre entrée de cette porte 80 est reliée à la sortie de la bascule monostable 75. La sortie de la porte 80 est reliée à une entrée d'un amplificateur-inverseur 81. La sortie de cet amplificateur est reliée, d'une part à une entrée d'une porte ET 82 à sortie inversée et, d'autre part, à une entrée d'une porte ET 83 à sortie inversée. Les autres entrées des portres 82 et 83 sont respectivement reliées aux sorties du registre 62 qui fournissent les signaux $AD_1^*$ et $AD_2^*$. Les sorties inversées des portes 82, 83 sont respectivement reliées aux entrées de circuit 84, 85, à transistors fonctionnant en collecteurs ouverts. Les sorties de ces circuits fournissent respectivement les signaux $FL_1$, $FL_2$, de remise à zéro des bascules 50, 51, 52 des moyens de codage 29 (figure 3).

La sortie du démultiplexeur 71 qui fournit le signal $SAD_3$ est reliée à une entrée S d'une bascule monostable simple 86, de type 74 LS 74 par exemple. Une entrée R de cette bascule est reliée à la sortie inversée de la porte ET 66 fournissant le signal $AD_0$. La sortie complémentaire $\overline{Q}$ de la bascule 86 est reliée à une entrée d'une porte 87 à trois états, de type 74 LS 126 par exemple. Une autre entrée de cette porte est reliée à la sortie de la bascule monostable 75. La sortie de la porte 87 est reliée à une entrée d'un inverseur 88 dont la sortie est elle-même reliée à une entrée d'une porte ET 89. L'autre entrée de la porte 89 est reliée à la sortie inversée de la porte OU 90, par l'intermédiaire d'un amplificateur-inverseur 91. Les entrées de la porte OU 90 sont respectivement reliées aux sorties du resgistre 62 qui fournissent les niveaux d'adresse $AD_1^*$ et $AD_2^*$. La sortie de la porte 89 est reliée à une entrée d'une porte ET 92 à sortie inversée. Les deux entrées de la porte 89 sont respectivement reliées à la sortie inversée de la porte 66 qui fournit le signal $AD_0$, et à la sortie de l'une des portes ET 65 qui fournit le signal $AD_{11}$. La sortie inversée de la porte ET 92 est reliée à une entrée d'un inverseur 93 ; la sortie de cet inverseur permet d'obtenir les signaux de remise à zéro $FL_1$ et $FL_2$ mentionnés plus haut par l'intermédiaire de circuits 94, 95, à transistors fonctionnant en collecteurs ouverts. Ces circuits sont par exemple du type 7407.

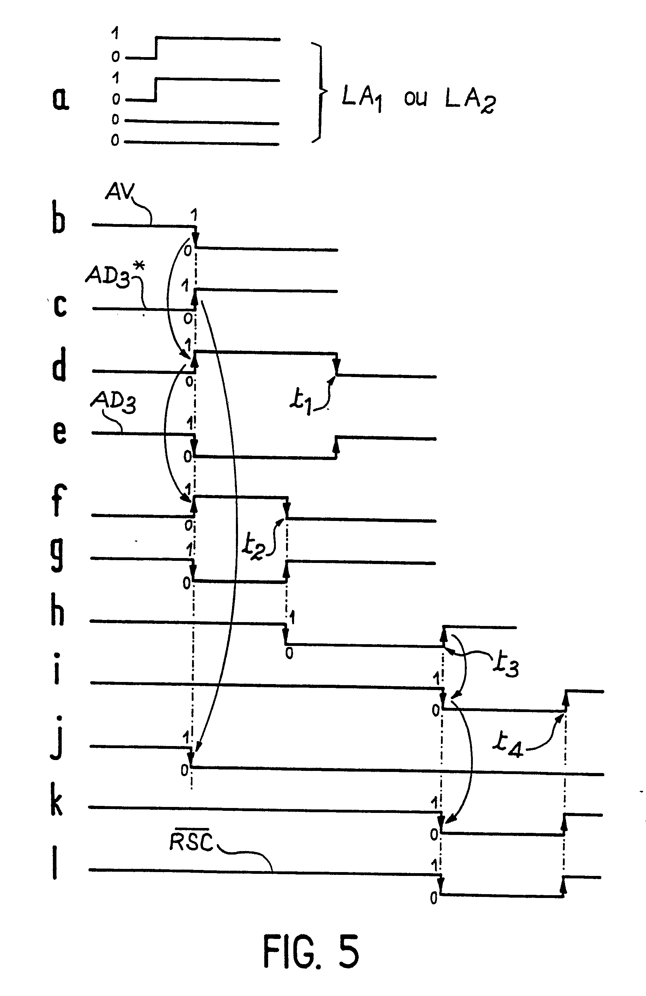

La figure 5 est un chronogramme des signaux apparaissant sur les sorties de certains des éléments des moyens d'adressage 34 et des moyens de remise à zéro 60. Ce chronogramme permet de mieux comprendre le fonctionnement de ces moyens, par exemple dans le cas où le processeur commande une remise à zéro du compteur 54, par un signal $\overline{RSC}$.

Le diagramme a représenté les signaux provenant des lignes de contrôle et parvenant respectivement sur les quatre entrées $LA_1$ du démultiplexeur 61. On a supposé sur ce diagramme que deux des lignes d'adresses qui étaient au niveau zéro, passent au niveau 1, les deux autres lignes restant au niveau 0.

Sur le diagramme b on suppose qu'au temps

$t = 0$, un signal AV de validation d'adresses, passant du niveau logique 1 au niveau logique 0, est appliqué sur l'entrée de l'amplificateur-inverseur 64 et sur l'entrée de la bascule monostable 63. Ce signal provoque la montée du signal $AD_3^*$ sur la sortie correspondante du registre 62 tel que représenté en c. L'application du signal AV sur l'entrée de la bascule monostable 63 déclenche cette bascule sur le front descendant. La sortie de la bascule 63 reste à un niveau 1 entre les instants $t_0$ et $t_1$. Le signal de sortie de la bascule 63 ainsi que le signal $AD_3^*$ permettent d'obtenir, sur la sortie inversée de la porte 65 correspondante, le signal $AD_3$ représenté sur le diagramme e. Ce signal présente un niveau logique 0 entre les instants $t_0$ et $t_1$. Le passage du niveau logique 1 au niveau logique 0, du signal de sortie de la bascule 63, provoque la montée du signal de sortie de la bascule monostable 70. Le signal de sortie de cette bascule reste au niveau 1 entre les instants $t_0$ et $t_2$ tel que représenté par le diagramme f. La sortie inversée de la porte 69 présente un niveau logique 0 entre les instants $t_0$ et $t_2$, compte tenu du niveau de sortie de la bascule 70 et du niveau du signal $AD_3^*$ appliqué sur l'une des entrées de la porte OU 67 à sortie inversée. Le signal sur la sortie inversée de la porte 69 est représenté sur le diagramme g. La montée du signal de sortie de la porte 69 provoque le déclenchement de la bascule monostable 76 dont le signal de sortie passe du niveau logique 1 au niveau logique 0, entre les instants $t_2$ et $t_3$, tel que représenté sur le diagramme h. La montée du signal de sortie de la bascule monostable 76 provoque la descente du signal de sortie de la bascule monostable 75, qui reste au niveau logique 0 entre les instants $t_3$ et $t_4$, tel que représenté sur le diagramme i.

On suppose que les signaux provenant des lignes de contrôle et qui sont appliqués sur les entrées $LA_2$ du démultiplexeur 71 sont tels que le signal $SAD_1$, sur une sortie du démultiplexeur 71, est au niveau logique 1 ; le signal sur la sortie $Q_1$ de la bascule 72 passe alors au niveau logique 1. Comme le signal $AD_3^*$ est au niveau logique 1, le signal sur la sortie inversée de la porte 73 passe au niveau logique 0 à l'instant $t_0$ tel que représenté sur le diagramme j. Ce signal est appliqué sur l'une des entrées de la porte 74 à trois états, tandis que l'autre entrée de cette porte reçoit le signal de sortie de la bascule monostable 75 ; ce signal de sortie est au niveau logique 0 entre les instants $t_3$ et $t_4$. Il en résulte qu'à la sortie de la porte 74 à trois états, le signal qui était au niveau logique 1 passe au niveau logique 0 entre les instants $t_3$ et $t_4$, tel que représenté sur le diagramme k. L'application du signal de sortie de la porte 74 sur l'entrée de la porte ET 77, à sortie inversée, provoque, par l'intermédiaire de la porte OU 78 à sortie inversée, la descente du signal $\overline{RSC}$, entre les instants $t_3$ et $t_4$, à la sortie de la porte 78. Ce signal est représenté sur le diagramme l et il est appliqué sur l'entrée correspondante du compteur 54 pour provoquer sa remise à zéro.

La remise à zéro du compteur 54 par le signal $\overline{RSC}$ peut également être effectuée par l'application d'un signal $AD_{10}$ de niveau logique 0, provenant de la sortie correspondante de l'une des portes 65 et appliqué sur une autre entrée de la porte 77. Cette remise à zéro peut également être effectuée par l'application d'un signal $\overline{AD_0}$, de niveau logique 1, appliqué sur une autre entrée de la porte OU 78 ; ce signal est obtenu à partir du signal $AD_0$ et l'inverseur 111. Dans les moyens de remise à zéro qui sont décrits ici, les signaux $AD_0$, $\overline{AD_0}$ sont des impulsions de remise à zéro général de l'ensemble des registres et bascules du système.

On ne décrira pas de manière détaillée la remise à zéro des bascules 50, 51, 52 des moyens de codage 29. Cette remise à zéro peut être, soit sélective grâce au signal $SAD_2$ appliqué sur l'entrée $S_2$ de la bascule 72, soit générale grâce au signal $SAD_3$ appliqué sur l'entrée S de la bascule 86. Lorsque la remise à zéro est sélective, il faut alors appliquer les signaux $AD_1^*$ et $AD_2^*$ requis sur les entrées des portes ET 82, 83, à sorties inversées. Ces signaux provoquent la chute du niveau logique 1 au niveau logique 0 de l'un des signaux $FL_1$ ou $FL_2$. Lorsque la remise à zéro est non sélective, le signal $AD_0$ de sortie de la porte 66, de niveau logique 0, est appliqué sur l'entrée R de la bascule 86. Les signaux $AD_1^*$ et $AD_2^*$ de niveau requis sont aussi appliqués sur les entrées de la porte ET 90 à sortie inversée. L'application du signal $AD_0$ sur une entrée de la porte ET 92 à sortie inversée, provoque alors la chute simultanée des signaux $FL_1$ et $FL_2$. Le signal $AD_{11}$ qui peut être appliqué sur l'une des entrées de la porte ET 92 à sortie inversée, est un signal de sécurité qui permet d'obtenir la chute des signaux $FL_1$ et $FL_2$ du niveau logique 1 au niveau logique 0, quels que soient les états logiques des autres signaux. Il est bien évident que les signaux $AD_1$, $AD_2$, ... $AD_9$ de sortie des portes 65 sont appliqués respectivement sur les entrées requises des registres, convertisseurs, amplificateurs, des figures 2 et 3, pour adresser ces différents éléments.

Dans le chronogramme qui vient d'être décrit, on n'a pas représenté les temps de propagation des signaux. Ces temps sont négligeables vis-à-vis des durées des impulsions.

Le système qui vient d'être décrit peut fonctionner selon deux modes différents.

Ce système peut fonctionner tout d'abord selon un mode quantitatif. Dans ce mode quantitatif, seule la cellule médiane 3 est utilisée, le multiplexeur 14 est adressé sur ses entrées 33 par le processeur 10 pour sélectionner les signaux logiques provenant de la sortie de l'amplificateur 6 correspondant à la cellule médiane 3. Les moyens opto-électroniques 1 sont alors positionnés en regard de la zone qui contient les données à saisir et, sous le contrôle d'un logiciel enregistré dans la mémoire 11 du processeur 10, le balayage pas à pas de cette zone est effectué. Pour chaque pas, le signal logique de sortie de l'amplificateur 6 est converti en une valeur numérique par le convertisseur analogique-numérique 13. Le processeur recherche ensuite les valeurs numériques maximale MA et minimale MI correspondant aux amplitudes maximale et minimale des signaux logiques fournis par la sortie de l'amplificateur 6, au cours du balayage. Le convertisseur numérique-analogique 22 correspondant à la cellule médiane 3 est alors chargé par la valeur numérique minimum MI, appliquée sur les entrées 24 de ce convertisseur. Le signal de sortie de l'amplificateur différentiel 15 (figure 2) présente donc une amplitude nulle pour une intensité minimum de radiations détectées par la cellule médiane 3. On peut alors calculer le gain de l'amplificateur programmable 16 pour fixer l'échelle des valeurs numériques obtenues à la sortie du convertisseur analogique-numérique 13 au cours des variations d'amplitudes des signaux fournis par l'amplificateur 6 entre les amplitudes maximale et minimale. Ces opérations représentent une optimisation de la dynamique de mesure du système. La valeur calculée du gain est alors chargée dans le registre 45 adressé par le signal $AD_9$. Ce réglage du gain étant effectué, le système est alors prêt à saisir des données sous le contrôle d'un logiciel enregistré dans la mémoire 11. On peut éventuellement définir MA et MI à partir de valeurs d'étalonnage externes (échelles standard de couleurs) ou internes (références de tension).

Le système peut aussi fonctionner selon un mode qualitatif. Ce mode de fonctionnement est destiné à la numérisation automatique de données graphiques constituées par une courbe, un tracé des lignes, des contours, ..., de manière automatique.

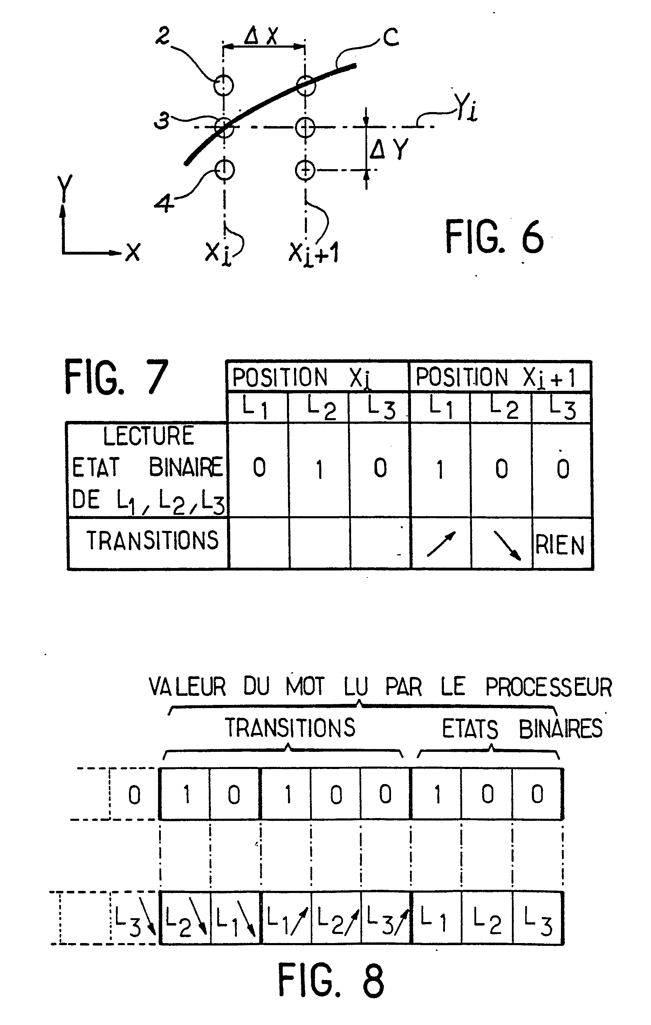

La figure 6 ainsi que le tableau de la figure 7 permettent de mieux comprendre sur un exemple simple particulier, le fonctionnement du système en mode qualitatif. On suppose que les données graphiques sont constituées par une courbe noire C, sur fond blanc ; le rôle des comparateurs 26, 27, 28 qui permettent de détecter les états et les transitions caractéristiques d'intensités lumineuses, ainsi que le rôle des registres 48, 49, des moyens de codage 29, vont maintenant être expliqués de manière plus détaillée.

Sur la figure 6 on a représenté, en exemple, une portion d'une courbe C, de couleur noire sur fond blanc, ainsi que deux positions occupées successivement par les cellules 2, 3, 4, au cours du déplacement de celles-ci, parallèlement à l'axe X du repère de coordonnées. On a supposé sur cette figure que les cellules sont alignées parallèlement à l'axe Y ; les deux positions successives des cellules au cours du déplacement parallèle à l'axe X sont désignées par $X_i$ et $X_{i+1}$, une distance $\Delta X$ séparant ces deux positions successives. On a également supposé que l'ordonnée de la cellule médiane 3 est repérée par $Y_i$ et que les cellules sont séparées par une distance $\Delta Y$. Dans cet exemple, pour la position $X_i$, c'est la cellule médiane 3 qui est située en regard de la courbe C, tandis que pour la position $X_{i+1}$, c'est la cellule latérale 2 qui est en regard de cette courbe.

Le tableau de la figure 7 représente, pour les positions $X_i$ et $X_{i+1}$, l'état binaire des signaux $L_1$, $L_2$, $L_3$, sur les sorties des comparateurs 26, 27, 28 correspondant aux cellules 2, 3, 4. C'est ainsi que dans l'exemple considéré, pour la position $X_i$, les niveaux logiques des signaux $L_1$, $L_2$, $L_3$, sont respectivement 0, 1, 0. Pour la position $X_{i+1}$, ces niveaux logiques sont respectivement 1, 0, 0 (en supposant conventionnellement que le niveau représente le minimum d'intensité reçue par les cellules, c'est-à-dire le noir dans l'exemple considéré). On a représenté par des flèches montantes et descendantes dans une deuxième ligne du tableau le sens des transitions de niveaux subies par les signaux $L_1$, $L_2$, $L_3$ dans le passage de la position $X_i$ à la position $X_{i+1}$. C'est ainsi que la flèche montante désigne une transition montante puisque le niveau du signal $L_1$ est passé de 0 à 1 entre $X_i$ et $X_{i+1}$. En effet, le signal $L_1$ correspondant à la cellule 2 est passé du niveau logique 0 au niveau logique 1 puisque cette cellule était, pour la position $X_i$, en regard du fond blanc sur lequel est tracée la Courbe C ; pour la position $X_{i+1}$, cette cellule est alors en regard de la courbe C de couleur noire. Pour la cellule médiane 3, la transition est descendante représentée par une flèche descendante. En effet, la cellule médiane 3 qui était en regard de la courbe C de couleur noire pour la position $X_i$ se trouve en regard du fond blanc pour la position $X_{i+1}$. Aucune flèche ne caractérise le signal $L_3$ puisque la cellule correspondante 4, n'a pas subi de transition. En effet, cette cellule qui se trouve en regard du fond blanc pour la position $X_i$ est restée en regard de ce fond blanc pour la position $X_{i+1}$.

La figure 8 représente les éléments binaires contenus par exemple dans les registres 48 et 49 (figure 3) pour la position $X_{i+1}$ des cellules 2, 3, 4. Les trois premières cases de droite de ce registre contiennent les éléments binaires correspondant aux états des signaux $L_1$, $L_2$, $L_3$ (1, 0, 0). Les trois éléments binaires suivants (1, 0, 0) représentent la transition montante du signal $L_1$. Enfin, les trois autres éléments binaires (0, 1, 0) représentent la transition descendante du signal $L_2$. La figure 8 donne une représentation possible de l'arrangement des éléments binaires représentant la totalité de l'information utile. Le mot de neuf éléments binaires qui est alors contenu dans les registres 48, 49 est lu par le processeur. Le processeur tient compte grâce au logiciel des éléments binaires contenus dans ce mot pour commander un déplacement $\Delta Y$ parallèlement à l'axe Y afin de ramener la cellule médiane 3, sur la courbe C. Ce n'est que lorsque cette cellule médiane est sur la courbe C, que le processeur enregistrera les nouvelles coordonnées $X_{i+1}$, $Y_{i+1}$. On voit donc à partir de cet exemple simple que l'utilisation de trois cellules permet au processeur de commander des déplacements qui amènent constamment la cellule médiane sur les données à saisir.

Dans ce mode qualitatif, le système fonctionne d'abord selon le mode quantitatif, au cours d'un balayage incrémental de la zone contenant les données à saisir, pour rechercher les valeurs MA et MI définies plus haut. Ce balayage incrémental permet par exemple de localiser le tracé d'une courbe sur une feuille ; il permet aussi de calculer les valeurs des seuils noir (N) ou blanc (B), si le tracé est par exemple une courbe noire sur fond blanc.

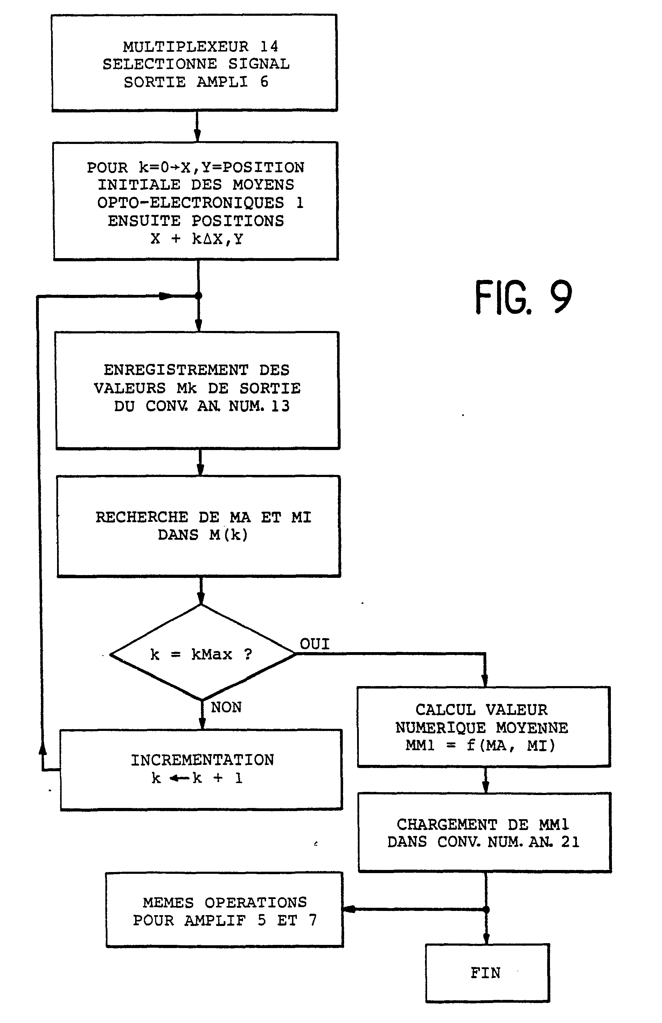

Ces opérations constituent une première phase de réglage du système et elles sont décrites de manière plus précise dans l'organigramme de la figure 9. Selon cet organigramme, le multiplexeur 14 sélectionne tout d'abord le signal de sortie de l'amplificateur 6 correspondant à la cellule médiane 3. Ensuite, les positions successives des moyens opto-électroniques étant fixées par des coefficients d'incrémentation k$\Delta$X, on choisit une position initiale des moyens 1 opto-électroniques (k = 0) ; la position initiale des moyens opto-électroniques est définie par les coordonnées X et Y pour k = 0. Les positions successives sont définies par (X + kx$\Delta$X), Y en supposant que les moyens opto-électroniques se déplacent parallèlement à l'axe X. L'opération suivante consiste, pour chaque position des moyens opto-électroniques et donc, pour chaque valeur du coefficient d'incrémentation k, à enregistrer la valeur numérique M(k) fournie en sortie du convertisseur analogique-numérique 13 ; cette valeur numérique correspond à chaque amplitude du signal analogique fourni par l'amplificateur 6 de sortie de la cellule médiane 3. Simultanément, on recherche parmi les valeurs M(k), les valeurs maximale MA et minimale MI. On effectue alors un test de la valeur du coefficient d'incrémentation k, pour savoir si cette valeur a atteint une valeur maximale (k max) fixée au départ en fonction de l'étendue de la zone à balayer.

Si la réponse à la question k = k max ? est négative, c'est que l'incrémentation peut être poursuivie (k → k + 1) ; les moyens opto-électroniques sont alors déplacés d'un pas parallèlement à l'axe X dans l'exemple considéré, les mêmes opérations que celles qui viennent d'être décrites sont alors effectuées à partir de l'opération d'enregistrement de la valeur numérique de sortie du convertisseur analogique-numérique 13.

Si au contraire, la réponse à la question k = k max ? est positive, le processeur calcule la valeur numérique moyenne MM$_1$ des valeurs numériques enregistrées dans la mémoire 11 du processeur au cours du balayage. Cette valeur numérique moyenne MM$_1$ est comprise entre les valeurs numériques maximale MA et minimale MI, elle correspond à l'amplitude moyenne des signaux de sortie de l'amplificateur 6 correspondant à la cellule médiane 3. Cette valeur numérique moyenne peut d'ailleurs être corrigée pour tenir compte de la non-linéarité de la réponse des moyens opto-électroniques, ainsi que des irrégularités du support contenant les données à saisir. Il est alors possible de charger cette valeur numérique moyenne dans le convertisseur numérique-analogique 21 par ses entrées 24. Cette phase initiale qui peut être qualifiée de phase de recherche automatique de contraste et d'ajustement des seuils est alors terminée (fin), pour les signaux analogiques de sortie de l'amplificateur 6 correspondant à la cellule médiane 3. Les mêmes opérations sont à effectuer respectivement pour les signaux analogiques de sortie de l'amplificateur 5 et de l'amplificateur 7 correspondant aux cellules latérales 2 et 4 ; ces opérations débutent respectivement par la sélection du signal de sortie de l'amplificateur 5 par le multiplexeur 14 et par la sélection du signal de sortie de l'amplificateur 7 par ce multiplexeur. Les moyens opto-électroniques sont alors calibrés pour fonctionner en repérage de frontière entre deux états de réflectivité distincts.

La phase suivante consiste à numériser les données graphiques saisies par les cellules opto-électroniques 2, 3, 4 au cours de déplacements de ces moyens en regard de la zone prédéterminée contenant les données à saisir. L'organigramme précédent est appliqué pour l'abscisse X$_0$ du premier point de la courbe à numériser ; le processeur effectue un calcul des ordonnées ; il commande ensuite le positionnement des moyens opto-électroniques pour que la cellule médiane 3 soit centrée sur la valeur Y$_0$. Ceci correspond en fait au positionnement de la cellule médiane 3 sur la courbe. Le mot « binaire » formé par les états logiques des signaux L$_1$, L$_2$, L$_3$ de sortie des comparateurs 26, 27, 28 présente alors la configuration binaire 0, 1, 0 représentant la valeur décimale 2.

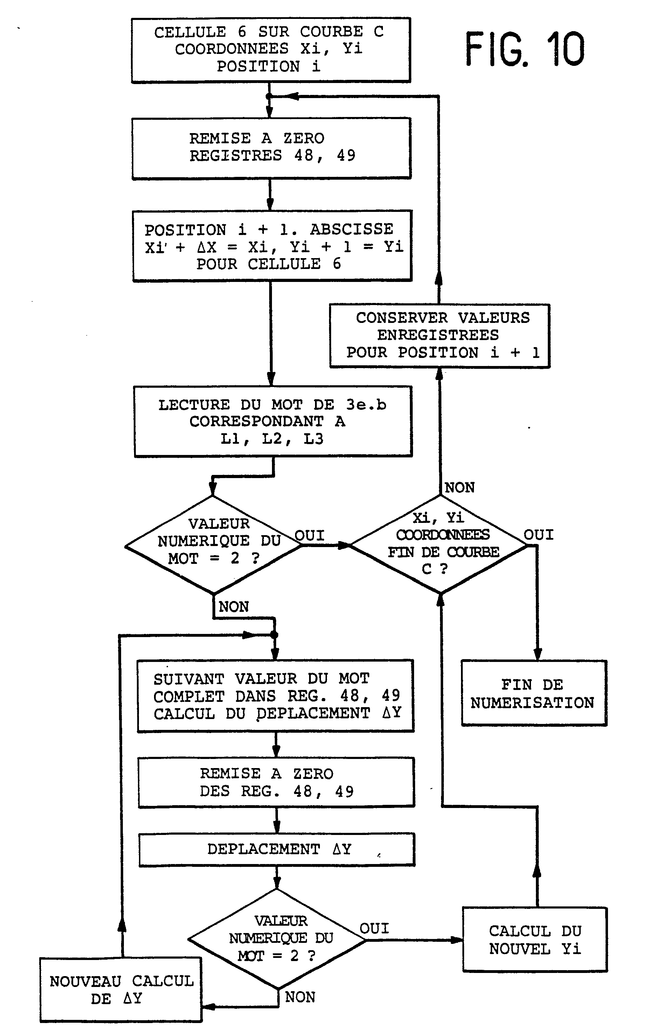

L'organigramme de la figure 10 représente la recherche des points suivants de la courbe par l'analyse des valeurs numériques lues dans les registres 48, 49. Dans cet organigramme, on considère au départ que le pas $\Delta$X est fixé par l'utilisateur au départ. Les moyens opto-électroniques sont alors sélectionnés de sorte que la cellule médiane 3 soit en regard de la courbe. On suppose que les coordonnées de cette cellule médiane, au départ, sont X$_i$ et Y$_i$. Les registres 48, 49, des moyens de codage 29 sont alors remis à zéro grâce aux signaux FL$_1$ et FL$_2$, appliqués sur les bascules 50, 51, 52. Les moyens opto-électroniques sont alors déplacés pour occuper la position i + l, de sorte que l'abscisse de la cellule médiane 3 corresponde à la valeur X$_{i + l}$ = X$_i$ + $\Delta$X. Le processeur vient alors lire dans les registres 48, 49, le mot de trois éléments binaires correspondant aux états logiques des signaux L$_1$, L$_2$, L$_3$. L'opération suivante consiste à tester si la valeur numérique du mot précédent est égale à 2 (correspondant à la valeur binaire 0 1 0, la cellule médiane étant en regard de la courbe).

Si la réponse au test du mot est affirmative, (OUI), on vérifie si les coordonnées X$_i$ et Y$_i$ correspondent aux coordonnées de la fin de la courbe. Si la réponse à cette vérification est affirmative (OUI), c'est que la numérisation des données graphiques est terminée. Si la réponse à cette vérification est négative (NON) on conserve les valeurs numériques enregistrées pour la position i + l, puis on reprend les mêmes opérations à partir de la remise à zéro des registres 48, 49.

Si la valeur numérique du mot de trois éléments binaires correspondant aux signaux $L_1$, $L_2$, $L_3$, est différente de 2 (réponse NON à la question : valeur numérique du mot = 2) selon la valeur du mot complet contenu dans les registres 48, 49 (mot qui indique les transitions subies par les signaux $L_1$, $L_2$, $L_3$), des décisions logiques sont prises par le processeur qui calcule le déplacement à effectuer, parallèlement à l'axe Y. Le contenu des registres 48 et 49 est alors remis à zéro, puis un déplacement ΔY parallèle à l'axe Y est effectué. On teste ensuite la valeur numérique du mot correspondant aux trois éléments binaires représentatifs des signaux $L_1$, $L_2$, $L_3$. Si cette valeur numérique est égale à 2 (réponse OUI à la question valeur numérique du mot = 23), le processeur calcule un nouveau déplacement parallèlement à l'axe Y, pour amener la cellule médiane dans une nouvelle position $Y_i$. On vérifie alors comme précédemment, si les coordonnées $X_i$, $Y_i$ de cette cellule représentent les coordonnées de fin de courbe.

Au contraire, si la réponse à la question valeur numérique du mot = 2, est négative (NON), c'est que le déplacement ΔY qui vient d'être effectué, n'a pas permis à la cellule médiane d'être positionnée à nouveau sur la courbe. Le processeur calcule alors un nouveau déplacement ΔY à partir, comme précédemment, de la valeur du mot complet contenu dans les registres 48, 49.

On a supposé bien entendu, dans l'exemple considéré, que l'on se plaçait dans des conditions idéales pour lesquelles l'épaisseur de la courbe C est inférieure ou égale à la distance entre les deux points de focalisation de deux cellules. Le logiciel peut être optimisé en tenant compte de la pente de la courbe et doit permettre d'envisager les situations les plus complexes (courbes épaisses, bruit, points de rebroussement, points singuliers...). On voit clairement d'après ces organigrammes, l'utilité des moyens de remise à zéro automatique (figure 4) permettant d'alléger le logiciel.

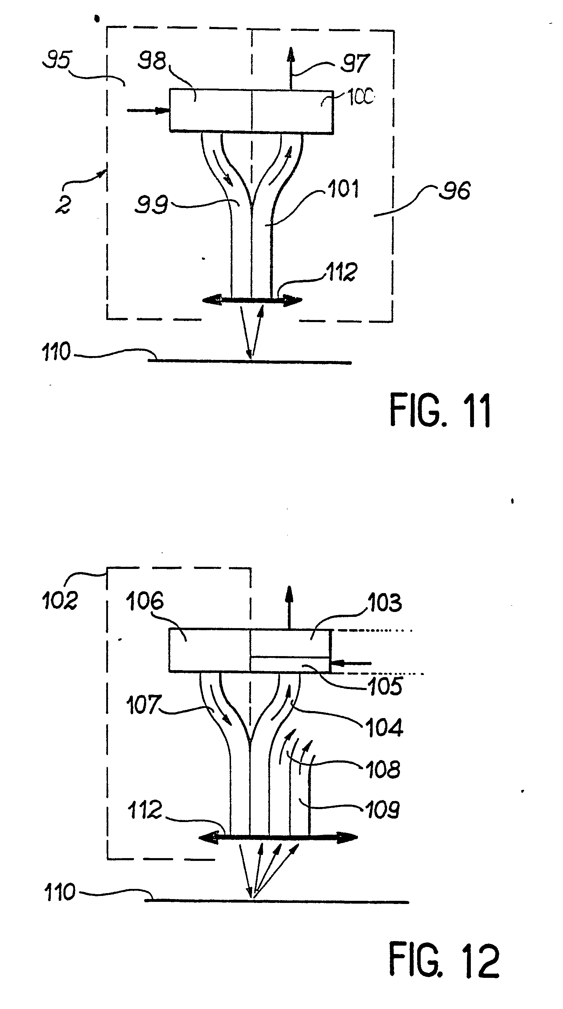

La figure 11 représente schématiquement un premier mode de réalisation d'une cellule photosensible utilisable dans le système de l'invention. Selon ce premier mode de réalisation, chaque cellule photosensible telle que la cellule 2 par exemple, comprend un émetteur 95 de radiations électromagnétiques, en direction d'un support 110 de données graphiques et un récepteur photosensible 96. Ce récepteur photosensible présente une sortie 97 qui est reliée à une entrée de l'un des amplificateurs de sortie représentés sur la figure 1. Dans ce mode de réalisation, l'émetteur 95 comprend une source de lumière 98 éclairant une fibre optique 99 dirigée vers la zone du support contenant les données à saisir. Le récepteur photosensible 96 comprend un détecteur photosensible 100 et une fibre optique 101 amenant vers le détecteur les radiations électromagnétiques réfléchies sur le support 110. On a représenté en 112, des moyens de focalisation.

La figure 12 représente schématiquement un autre mode de réalisation des cellules photosensibles utilisées dans le système de l'invention. Dans ce mode de réalisation, les cellules photosensibles comprennent un émetteur commun 102, de radiations de lumière blanche, et trois récepteurs photosensibles aux différentes longueurs d'ondes de ces radiations. Sur cette figure, seul l'un des récepteurs photosensibles a été représenté. Ce récepteur comprend un détecteur photosensible 103 et une fibre optique 104 amenant vers le détecteur les radiations réfléchies sur le support 110. Chaque détecteur 103 est associé à des filtres commutables représentés schématiquement en 105. L'émetteur dans ce mode de réalisation est constitué par une source de lumière blanche 106, éclairant une fibre optique 107 dirigée vers la zone du support 110 qui contient les données à saisir. On a également représenté sur cette figure, les fibres 108, 109, associées aux deux autres détecteurs de cette cellule photosensible. Les filtres optiques commutables permettent en fait au système de l'invention de saisir des données polychromatiques.

Selon un autre mode de réalisation qui peut être décrit à l'aide de la figure 11, l'émetteur 98 peut être un émetteur émettant sélectivement des radiations à différentes longueurs d'ondes. Dans ce cas, le détecteur 100 est, bien entendu, sensible aux différentes longueurs d'ondes de ces radiations. Cet émetteur peut être par exemple une source 98 émettant par commutation, des radiations de différentes longueurs d'ondes. Cette source éclaire la fibre optique 99 dirigée vers le support 110. Dans ce mode de réalisation, le récepteur est constitué par un détecteur 100 photosensible aux différentes longueurs d'ondes émises par la source et par une fibre optique 101 amenant vers ce détecteur les radiations réfléchies sur le support 96. Il est bien évident que dans les deux derniers modes de réalisation décrits, les filtres commutables 105 ou la source commutable 98, peuvent être commandés par le processeur 10 à partir d'instructions enregistrées dans la mémoire 11.

Dans ces différents modes de réalisation, les fibres optiques peuvent être associées à des moyens de focalisation 112.

La précision de fonctionnement dans le mode qualitatif est liée à trois facteurs essentiels : les dimensions de la figure créée par la disposition des points de focalisation, elles-mêmes liées à la précision de focalisation des moyens de détection, et la précision absolue des moyens de positionnement.

La précision de fonctionnement dans le mode quantitatif dépend de la connaissance et de la fiabilité des caractéristiques de transfert des moyens de détection (linéarité et coefficient de température). Elle dépend aussi du facteur de quantification choisi dans la conversion analogique-numérique effectuée par le convertisseur 13. Le système peut s'appliquer à la spectrométrie, à la photométrie ou à la densitométrie des surfaces dans un large domaine de longueurs d'ondes, il permet par exemple l'analyse de photographies, de radiographies, de diagrammes de rayons X, des chromatographies ; il peut être utilisé pour déterminer des contours ou pour étudier la granularité de surfaces.

## Revendications

1. Système de saisie de données inscrites sur un support comportant des moyens de détection (1) comprenant des cellules photosensibles (2, 3, 4) à différentes intensités de radiations électromagnétiques, de longueurs d'ondes prédéterminées, provenant de données inscrites sur un support, ces moyens de détection (1) fournissant sur des sorties, des signaux analogiques dont les amplitudes dépendent respectivement des intensités de radiations, des moyens (8) pour déplacer les cellules (2, 3, 4) au moins dans une zone contenant les données à saisir, des moyens (9) de commande et de traitement comprenant un processeur (10) relié aux moyens (8) pour déplacer les cellules (2, 3, 4) et à une mémoire (11), des moyens de conversion analogique-numérique (12) recevant lesdits signaux analogiques au cours du déplacement des cellules (2, 3, 4) pour fournir sur une sortie, des valeurs numériques correspondant respectivement auxdites amplitudes, la mémoire (11) contenant des instructions de commande des moyens (8) pour déplacer les cellules (2, 3, 4) par rapport à un repère fixe de coordonnées (X, Y) et des instructions de traitement et d'adressage desdites valeurs numériques, en relation avec les coordonnées des données, les moyens de détection (1) comprenant au moins une cellule photosensible médiane (3) et deux cellules photosensibles (2, 4) de part et d'autre de cette cellule médiane, et des amplificateurs de sortie (5, 6, 7) respectivement reliés à des sorties des cellules pour fournir sur des sorties d'amplification lesdits signaux analogiques, caractérisé en ce que les moyens de conversion analogique-numérique (12) comprennent un multiplexeur (14) relié aux sorties des amplificateurs de sortie, un convertisseur analogique-numérique (13) relié à des sorties du multiplexeur, le système comprenant en outre des moyens de comparaison (17) à sorties logiques reliés aux amplificateurs de sortie et recevant des valeurs d'amplitude moyenne de référence de comparaison, pour comparer les valeurs instantanées desdites amplitudes des signaux analogiques avec des valeurs d'amplitude moyenne de référence de comparaison, au cours du déplacement des cellules (2, 3, 4), des états ou changements d'états logiques des signaux fournis par les sorties de ces moyens de comparaison (17) étant représentatifs des transitions instantanées d'intensités des radiations, provoquées par la saisie des données par les cellules (2, 3, 4) au cours de leurs déplacements, les amplitudes de référence de comparaison étant déterminées par le processeur (10) au cours d'un déplacement des cellules permettant un balayage préalable de la zone contenant les données à saisir à partir des amplitudes des signaux fournis respectivement par les amplificateurs de sortie (5, 6, 7) au cours du balayage préalable, tous les signaux de sortie du multiplexeur étant appliqués au convertisseur analogique-numérique dans un fonctionnement dit « qualitatif » du système, les moyens de conversion comprenant aussi des moyens programmables (15, 16) d'amplification des amplitudes des signaux analogiques fournis par l'amplificateur de sortie (6) correspondant à la cellule médiane (3), ces moyens programmables n'intervenant que pour un fonctionnement dit « quantitatif » du système, l'amplification étant effectuée à partir d'une amplitude prédéterminée de référence d'amplification, pour les signaux analogiques correspondant à la seule cellule médiane (3), le gain des moyens d'amplification étant programmable par le processeur et dépendant d'une échelle souhaitée de valeurs numériques en sortie du convertisseur analogique-numérique (13) pour les signaux analogiques correspondant à la cellule médiane, l'amplitude de référence d'amplification étant déterminée au cours d'un balayage préalable, seuls les signaux de sortie du multiplexeur qui correspondent aux signaux de la cellule médiane, amplifiés par les moyens programmables, étant appliqués au convertisseur analogique-numérique, au cours de ce fonctionnement « quantitatif ».

2. Système selon la revendication 1, caractérisé en ce que les moyens programmables d'amplification comprennent un comparateur analogique (15) recevant sur une entrée, un signal présentant ladite amplitude prédéterminée de référence d'amplification, et sur une autre entrée, les signaux analogiques fournis par l'amplificateur de sortie de la cellule médiane (3), au cours des déplacements dans ladite zone, un amplificateur (16) à gain programmable prédéterminé par le processeur (10), une entrée de cet amplificateur (16) étant reliée à une sortie du comparateur analogique (15), une sortie de cet amplificateur (16) étant reliée à une entrée (19) du multiplexeur (14), pour commuter les seuls signaux amplifiés correspondant à la cellule médiane (3), vers le convertisseur analogique-numérique (13).

3. Système selon la revendication 2, caractérisé en ce que les moyens de comparaison (17) à sorties logiques comprennent pour chaque amplificateur de sortie (5, ou 6, ou 7), un convertisseur numérique-analogique (20, ou 21, ou 22) recevant sur une entrée une valeur numérique de référence de comparaison fournie par le processeur (10), cette valeur numérique correspondant à l'amplitude moyenne de référence de comparaison, pour les signaux analogiques fournis par l'amplificateur de sortie correspondant, un comparateur (26, ou 27, ou 28) à deux entrées, une entrée de ce comparateur étant reliée à la sortie du convertisseur numérique-analogique (20, ou 21, ou 22 correspondant) pour recevoir un signal analogique dont l'amplitude correspond à la valeur numérique de référence de comparaison, une autre entrée de ce comparateur étant reliée à la sortie de l'amplificateur de sortie correspondant, chaque comparateur (20, ou 21, ou 22) fournissant sur une sortie, un signal logique dont les deux états sont représentatifs des états caractéristiques d'intensités des radiations émises par les données graphiques et détectées par la cellule correspondante (2, ou 3, ou 4), ces états étant détectés au cours de la saisie des données et indiquant respectivement si l'amplitude du signal fourni par l'amplificateur de sortie de cette cellule est supérieure ou inférieure à l'amplitude moyenne de référence de comparaison pour cette cellule.

4. Système selon la revendication 3, caractérisé en ce qu'il comprend en outre des moyens de codage (29) présentant des entrées reliées aux sorties (L1, L2, L3) des comparateurs (26, 27, 28) pour former au cours de la saisie des données, des mots représentant des états binaires instantanés des sorties des comparateurs (26, 27, 28) et permettant de repérer les sorties des comparateurs dont les signaux viennent de subir un changement d'état binaire, ces mots étant fournis au processeur (10) par des sorties (30) des moyens de codage (29).

5. Système selon la revendication 4, caractérisé en ce que les moyens de codage (29) comprennent au moins un registre (48, 49), les sorties de ce registre formant les sorties (30) des moyens de codage, des entrées de ce registre étant reliées aux sorties (L1, L2, L3) des comparateurs et trois bascules bistables (50, 51, 52) présentant respectivement deux entrées de commande, les entrées des première (50), deuxième (51) et troisième (52) de ces bascules étant respectivement reliées aux sorties (L1, L2) du premier et du deuxième comparateurs'(26, 27), du premier (26) et du troisième (28) comparateurs, du deuxième (27) et du troisième comparateurs (28), parmi les trois comparateurs des moyens de comparaison (17).

6. Système selon la revendication 5, caractérisé en ce qu'il comprend en outre au moins un compteur (56, 57) présentant une entrée qui est reliée à la sortie (L1) du deuxième comparateur (27) correspondant à la cellule médiane (3), pour compter le nombre de changements d'états logiques subis par le signal de sortie de ce comparateur, au cours de la saisie des données ou au cours du balayage préalable.

7. Système selon la revendication 6, caractérisé en ce que des sorties de ce compteur sont reliées au processeur (10) par l'intermédiaire d'un registre (55).

8. Système selon la revendication 7, caractérisé en ce qu'il comprend en outre des moyens d'adressage (34) de multiplexeur (14), du convertisseur analogique-numérique (13), de l'amplificateur (16) à gain programmable, des convertisseurs numériques-analogiques (20, 21, 22) des registres (48, 49, 55).

9. Système selon la revendication 8, caractérisé par le fait qu'il comprend en outre au moins des moyens automatiques (60) de remise à zéro présentant des sorties reliées à des entrées de commande des bascules (50, 51, 52) et du compteur (56, 57) des entrées de ces moyens de remise à zéro étant reliées à des sorties des moyens d'adressage (34).

10. Système selon la revendication 9, caractérisé en ce que chaque cellule photosensible (2) comprend un émetteur (95) de radiations électromagnétiques et un récepteur (96) photosensible présentant une sortie (97) qui est reliée à une entrée de l'un des amplificateurs de sortie.

11. Système selon la revendication 10, caractérisé en ce que l'émetteur (95) comprend une source de lumière (98) éclairant une fibre optique (99) dirigée vers la zone contenant les données à saisir, le récepteur photosensible (96) comprenant un détecteur photosensible (100) et une fibre optique (101) amenant vers le détecteur (100) les radiations électro-magnétiques réfléchies sur la zone contenant les données à saisir.

12. Système selon la revendication 9, caractérisé en ce que les cellules photosensibles comprennent un émetteur commun (102) de radiations de lumière blanche et trois récepteurs (103) photosensibles à différentes longueurs d'onde de ces radiations.

13. Système selon la revendication 12, caractérisé en ce que l'émetteur comprend une source (100) de radiations de lumière blanche éclairant une fibre optique dirigée vers la zone contenant les données à saisir, les récepteurs comprenant respectivement un détecteur photosensible (103) et une fibre optique (104) amenant vers le détecteur les radiations réfléchies sur ladite zone, chaque détecteur (103) étant associé à des filtres optiques (105) commutables, sensibles respectivement aux différentes longueurs d'onde.

14. Système selon la revendication 9, caractérisé en ce que les cellules photosensibles comprennent au moins un émetteur commun (95) pouvant émettre sélectivement des radiations à différentes longueurs d'onde, et pour chaque cellule photosensible, un récepteur (96) sensible aux différentes longueurs d'onde et intensités de ces radiations.

15. Système selon la revendication 14, caractérisé en ce que l'émetteur comprend au moins une source (98) pouvant émettre par commutation, des radiations de différentes longueurs d'onde, cette source éclairant une fibre optique (99) dirigée vers la zone contenant les données à saisir, chaque récepteur (96) comprenant un détecteur photosensible (100) aux différentes longueurs d'onde et une fibre optique (101) amenant vers le détecteur, les radiations réfléchies sur ladite zone.

16. Système selon la revendication 9, caractérisé en ce que la mémoire (11) reliée au processeur (10) contient en outre des instructions de commande des moyens (8) pour déplacer les moyens opto-électroniques, en fonction des mots de valeur binaire fournis au processeur par les moyens de codage (29).

17. Système selon la revendication 13, caractérisé en ce que la mémoire (11) reliée au processeur (10) contient en outre des instructions de commutation des filtres (105).

18. Système selon la revendication 15, caractérisé en ce que la mémoire (11) reliée au processeur (10) contient en outre des instructions de commutation de la source (98).

19. Système selon l'une quelconque des revendications 11, 13 et 15, caractérisé en ce que les fibres optiques sont associées à des moyens de focalisation (112).

## Claims

1. System for the acquisition of data written on a medium comprising means of detection (1) including cells (2, 3, 4) that are photosensitive to different intensities of electromagnetic radiations, of predetermined wavelengths, coming from data written on a medium, these means of detection (1) providing on outputs, analog signals whose amplitudes depend on the respective radiation intensities, means (8) of moving the cells (2, 3, 4) at least in a zone containing the data to be acquired, means (9) of control and processing including a processor (10) connected to the means (8) of moving the cells (2, 3, 4) and a memory (11), means of analog-digital conversion (12) receiving the said analog signals during the movement of the cells (2, 3, 4) in order to provide on an output digital values respectively corresponding to the said amplitudes, the memory (11) containing control instructions for the means (8) of moving the cells (2, 3, 4) with respect to a fixed reference of coordinates (X, Y) and processing and addressing instructions for the said digital values, in relation with the coordinates of the data, the means of detection (1) including at least one median photosensitive cell (3) and two photosensitive cells (2, 4) on either side of this median cell, and output the amplifiers (5, 6, 7) respectively connected to the outputs of the cells in order to provide the said analog signals on the amplification outputs, characterized in that the means of analog-digital conversion (12) include a multiplexer (14) connected to the outputs of the output amplifiers, an analog-digital converter (13) connected to outputs of the multiplexer, the system also including means of comparison (17) with logic outputs connected to the output amplifiers and receiving average amplitude comparison reference values in order to compare the instantaneous values of the said amplitudes of the analog signals with average amplitude comparison reference values, during the movement of the cells (2, 3, 4), states or changes of logic states of the signals provided by the outputs of these means of comparison (17) representing instantaneous transitions of radiation intensities, caused by the acquisition of data by the cells (2, 3, 4) during their movements, the comparison reference amplitudes being determined by the processor (10) during a movement of the cells enabling a prior scan of the zone containing the data to be acquired from amplitudes of signals respectively provided by the output amplifiers (5, 6, 7) during the prior scan, all the output signals of the multiplexer being applied to the analog-digital converter in a system operation known as « qualitative », the means of conversion also including programmable means (15, 16) of amplification of the amplitudes of the analog signals provided by the output amplifier (6) corresponding to the median cell (3), these programmable means intervening only for a system operation known as « quantitative », the amplification being carried out from a predetermined amplification reference amplitude, for the analog signals corresponding to the median cell (3) alone, the gain of the means of amplification being programmable by the processor and depending on a desired scale of digital values at the output of the analog-digital converter (13) for the analog signals corresponding with the median cell, the amplification reference amplitude being determined during a prior scan, only the output signals of the multiplexer which correspond to the signals of the median cell, amplified by the programmable means, being applied to the analog-digital converter, during this « quantitative » operation.

2. System according to Claim 1, characterized in that the programmable means of amplification include an analog comparator (15) receiving on one input a signal representing the said predetermined amplification reference amplitude, and on another input, the analog signals provided by the output amplifier of the median cell (3), during the movements in the said zone, an amplifier (16) with programmable gain predetermined by the processor (10), one input of this amplifier (16) being connected to an output of the analog comparator (15), an output of this amplifier (16) being connected to an input (19) of the multiplexer (14) in order to switch the amplified signals only corresponding to the median cell (3), towards the analog-digital converter (13).

3. System according to Claim 2, characterized in that the means of comparison (17) with logic outputs include for each output amplifier (5, or 6, or 7), a digital-analog converter (20, or 21 or 22) receiving on one input a digital comparison reference value supplied by the processor (10), this digital value corresponding to the average comparison reference amplitude, for the analog signals provided by the corresponding output amplifier, a comparator (26, or 27, or 28) with two inputs, one input of this comparator being connected to the output of the corresponding digital-analog converter (20, or 21, or 22) in order to receive an analog signal whose amplitude corresponds to the digital comparison reference value, another input of this comparator being connected to the output of the corresponding output amplifier, each comparator (20, or 21, or 22) providing at an output, a logic signal whose two states represent characteristic states of intensities of the radiations emitted by the graphic data and detected by the corresponding cell (2, or 3, or 4), these states being detected during the data acquisition and respectively indicating whether the amplitude of the signal provided by the output amplifier of this cell is greater than or less than the average comparison reference amplitude for this cell.

4. System according to Claim 3, characterized in that it also includes means of coding (29) having inputs connected to the outputs (L1, L2, L3) of the comparators (26, 27, 28) in order to form during data acquisition, words representing instantaneous binary states of the outputs of the comparators (26, 27, 28) and permitting the marking of the outputs of the comparators whose signals have just undergone a change of binary state, these words being supplied to the processor (10) by outputs (30) of the means of coding (29).

5. System according to Claim 4, characterized in that the means of coding (29) include at least one register (48, 49) the outputs of this register forming the outputs (30) of the means of coding, inputs of this register being connected to the outputs (L1, L2, L3) of the comparators and three bistable flip-flops (50, 51, 52) respectively having two control inputs, the inputs of the first (50), second (51) and third (52) of these flip-flops being respectively connected to the outputs (L1, L2) of the first and of the second comparators (26, 27), of the first (26) and of the third (28) comparators, of the second (27) and of the third comparators (28), of the three comparators of the means of comparison (17).

6. System according to Claim 5, characterized in that it also includes at least one counter (56, 57) having one input which is connected to the output (L1) of the second comparator (27) corresponding to the median cell (3), in order to count the number of changes in logic states undergone by the output signal of this comparator, during data acquisition or during the prior scan.

7. System according to Claim 6, characterized in that outputs of this counter are connected to the processor (10) by means of a register (55).

8. System according to Claim 7, characterized in that it also includes means of addressing (34) the multiplexer (14), the analog-digital converter (13), the programmable gain amplifier (16) and the digital-analog converters (20, 21, 22) of the registers (48, 49, 55).

9. System according to Claim 8, characterized in that it also includes at least automatic means (60) of resetting to zero having outputs connected to control inputs of the flip-flops (50, 51, 52) and of the counter (56, 57), inputs of these means of resetting to zero being connected to outputs of the means of addressing (34).

10. System according to Claim 9, characterized in that each photosensitive cell (2) includes an emitter (95) of electromagnetic radiations and a photosensitive receiver (96) having an output (97) which is connected to an input of one of the output amplifiers.

11. System according to Claim 10, characterized in that the emitter (95) includes a light source (98) illuminating an optical fibre (99) directed towards the zone containing the data to be acquired, the photosensitive receiver (96) including a photosensitive detector (100) and an optical fibre (101) taking the electromagnetic radiations reflected on the zone containing the data to be acquired to the detector (100).

12. System according to Claim 9, characterized in that the photosensitive cells include a common emitter (102) of white light radiations and three receivers (103) photosensitive to different wavelengths of these radiations.

13. System according to Claim 12, characterized in that the emitter includes a source (100) of white light radiation illuminating an optical fibre directed towards the zone containing the data to be acquired, the receivers respectively including a photosensitive detector (103) and an optical fibre (104) taking the radiations reflected on the said zone to the detector, each detector (103) being associated with switchable optical filters (105), respectively sensitive to the various wavelengths.

14. System according to Claim 9, characterized in that the photosensitive cells include at least one common emitter (95) that can selectively emit radiations at different wavelengths, and for each photosensitive cell, a receiver (96) sensitive to the various wavelengths and intensities of these radiations.

15. System according to Claim 14, characterized in that the emitter includes at least one source (98) that can emit, by switching radiations of different wavelengths, this source illuminating an optical fibre (99) directed towards the zone containing the data to be acquired, each receiver (96) including a detector (100) photosensitive to the various wavelengths and an optical fibre (101) taking the radiations reflected on the said zone to the detector.

16. System according to Claim 9, characterized in that the memory (11) connected to the processor (10) also contains control instructions for the means (8) of moving the opto-electronic means, depending on words having a binary value provided to the processor by the means of coding (29).

17. System according to Claim 13, characterized in that the memory (11) connected to the processor (10) also contains switching instructions for the filters (105).

18. System according to Claim 15, characterized in that the memory (11) connected to the processor (10) also contains switching instructions for the source (98).

19. System according to any one of Claims 11, 13 or 15, characterized in that the optical fibres are associated with focusing means (112).

**Patentansprüche**

1. System zur Aufnahme von auf einem Träger aufgezeichneten Daten mit Erfassungsmitteln (1), die Zellen (2, 3, 4) aufweisen, die für unterschiedliche, elektromagnetische, von den auf einen Träger aufgezeichneten Daten herkommenden Strahlungsintensitäten vorbestimmter Wellenlängen fotoempfindlich sind, wobei die Erfassungsmittel (1) an den Ausgängen Analogsignale bereitstellen, deren jeweilige Amplituden von den Strahlungsintensitäten abhängen, mit Mitteln (8) zum Bewegen der Zellen (2, 3, 4) zumindest in einem die aufzunehmenden Daten enthaltenden Bereich, mit Steuer- und Verarbeitungsmitteln (9), die einen mit den Mitteln (8) zum Bewegen der Zellen (2, 3, 4) verbundenen Prozessor (10) und einen Speicher (11) umfassen, mit Analog/Digital-Umwandlungsmitteln (12), die die Analogsignale während der Bewegung der Zellen (2, 3, 4) erhalten, um an einem Ausgang den jeweiligen Amplituden entsprechende, digitale Werte abzugeben, wobei der Speicher (11) Steuerbefehle für die Mittel (8) zum Bewegen der Zellen (2, 3, 4) in Bezug auf ein festes Bezugskoordinatensystem (X, Y) und Befehle zum Verarbeiten und Adressieren der digitalen Werte in Bezug auf die Koordinaten der Daten erhält, und die Erfassungsmittel (1) wenigstens eine mittlere, fotoempfindliche Zelle (3) und zwei fotoempfindliche Zellen (2, 4) beidseitig dieser mittleren Zelle aufweisen sowie Ausgangsverstärker (5, 6, 7), die jeweils mit den Ausgängen der Zellen verbunden sind, um an den Verstärkerausgängen die Analogsignale bereitzustellen, dadurch gekennzeichnet, daß die Analog/Digital-Umwandlungsmittel (12) einen Multiplexer, der mit den Ausgängen der Ausgangsverstärker verbunden ist und einen mit den Ausgängen des Multiplexers verbundenen Analog/Digital-Umwandler (13) aufweisen, daß das System ferner logische Ausgänge aufweisende Vergleichsmittel (17) umfaßt, die mit den Ausgangsverstärkern verbunden sind und die Werte der mittleren Bezugsvergleichsamplitude erhalten, um die momentanen Werte der Amplituden der Analogsignale mit den Werten der mittleren Bezugsvergleichsamplitude während einer Bewegung der Zellen (2, 3, 4) zu vergleichen, wobei die Zustände oder Änderungen der logischen Zustände der von den Ausgängen dieser Vergleichsmittel (17) bereitgestellten Signale für die momentanen Strahlungsintensitätsübergänge repräsentativ sind, die durch das Aufnehmen der Daten mittels der Zellen (2, 3, 4) im Laufe ihrer Bewegungen hervorgerufen wurden, daß die Bezugsvergleichsamplituden durch den Prozessor (10) im Laufe einer Bewegung der Zellen bestimmt werden, was ein vorläufiges Abtasten des die aufzunehmenden Daten enthaltenden Bereiches aufgrund der Signalamplituden erlaubt, die von den jeweiligen Ausgangsverstärkern (5, 6, 7) im Laufe der vorläufigen Abtastung abgegeben worden sind, daß alle Ausgangssignale des Multiplexers bei einem « qualitativen » Betrieb des Systems den Analog/Digital-Umwandler zugeführt werden, daß die Umwandlungsmittel auch programmierbare Verstärkungsmittel (15, 16) für die Amplituden der Analogsignale umfassen, die von dem der mittleren Zelle (3) entsprechenden Ausgangsverstärker (6) geliefert worden sind, daß diese programmierbaren Mittel nur bei einem « quantitativen » Betrieb des Systems mitwirken, daß die Verstärkung aufgrund einer vorbestimmten Bezugsverstärkungsamplitude für die der einzigen mittleren Zelle (3) entsprechenden Analogsignale durchgeführt wird, daß der Verstärkungsfaktor der Verstärkungsmittel durch den Prozessor programmierbar ist und von einer erwünschten Skala der numerischen Werte am Ausgang des Analog/Digital-Umwandlers (13) für die der mittleren Zelle entsprechenden Analogsignale abhängt, daß die Bezugsverstärkungsamplituden im Laufe einer vorläufigen Abtastung bestimmt werden, wobei nur die Ausgangssignale des Multiplexers, die den Signalen der mittleren Zelle, die von den programmierbaren Mitteln verstärkt sind, entsprechen, an den Analog/Digital-Umwandler während dieses « quantitativen » Betriebs angelegt werden.

2. System nach Anspruch 1, dadurch gekennzeichnet, daß die programmierbaren Verstärkungsmittel einen analogen Komparator (15), der an einem Eingang ein Signal, welches die vorbestimmte Bezugsverstärkungsamplitude darstellt, und an einem anderen Eingang die Analogsignale erhält, die von dem Ausgangsverstärker der mittleren Zelle (3) während der Bewegungen in diesem Bereich abgegeben werden, und einen Verstärker (16) mit programmierbarem, durch den Prozessor (10) vorbestimmten Verstärkungsfaktor aufweist, daß ein Eingang dieses Verstärkers (16) mit einem Ausgang des analogen Komparators (15) verbunden ist, und daß ein Ausgang dieses Verstärkers (16) mit einem Eingang (19) des Multiplexers (14) verbunden ist, um die einzigen verstärken Signale, die der mittleren Zelle (3) entsprechen, zu dem Analog/Digital-Umwandler (13) umzuschalten.

3. System nach Anspruch 2, dadurch gekennzeichnet, daß die Vergleichsmittel (17) mit logischen Ausgängen für jeden Ausgangsverstärker (5 oder 6 oder 7) einen Digital/Analog-Umwandler (20 oder 21 oder 22), der an einem Eingang einen von dem Prozessor (10) bereitgestellten digitalen Bezugsvergleichswert erhält, wobei dieser digitale Wert der mittleren Bezugsvergleichsamplitude für die von dem entsprechenden Ausgangsverstärker gelieferten Analogsignale entspricht, und einen Komparator (26 oder 27 oder 28) mit zwei Eingängen umfaßt, wobei ein Eingang dieses Komparators mit dem Ausgang des entsprechenden Digital/Analog-Umwandlers (20 oder 21 oder 22) verbunden ist, um ein Analogsignal zu erhalten, dessen Amplitude dem digitalen Bezugsvergleichswert entspricht, und ein anderer Eingang dieses Komparators mit dem Ausgang des entsprechenden Ausgangsverstärkers verbunden ist, daß jeder Komparator (20 oder 21 oder 22) an einem Ausgang ein logisches Signal abgibt, dessen zwei Zustände für die charakteristischen Zustände der Strahlungsintensitäten repräsentativ sind die von den graphischen Daten ausgesandt und von der entsprechenden Zelle (2 oder 3 oder 4) erfaßt werden, und daß diese im Laufe der Datenaufnahme erfaßten Zustände jeweils anzeigen, ob die Amplitude des von dem Ausgangsverstärker dieser Zelle abgegebenen Signals größer oder kleiner als die mittlere Bezugsvergleichsamplitude für diese Zelle ist.

4. System nach Anspruch 3, dadurch gekennzeichnet, daß es ferner Codierungsmittel (29) aufweist, die mit den Ausgängen (L1, L2, L3) der Komparatoren (26, 27, 28) verbundene Eingänge aufweisen, um während der Datenaufnahme Wörter zu bilden, die binäre Momentanzustände der Ausgänge der Komparatoren (26, 27, 28) darstellen und ermöglichen, die Ausgänge der Komparatoren, deren Signale eine binäre Zustandsänderung erfahren haben, zu lokalisieren, und daß diese Wörter dem Prozessor (10) über die Ausgänge (30) der Codierungsmittel (29) geliefert werden.

5. System nach Anspruch 4, dadurch gekennzeichnet, daß die Codierungsmittel (29) wenigstens ein Register (48, 49) umfassen, wobei die Ausgänge dieses Registers die Ausgänge (30) der Codierungsmittel bilden, daß die Eingänge dieses Registers mit den Ausgängen (L1, L2, L3) der Komparatoren verbunden sind und drei bistabile Multivibratoren (50, 51, 52) jeweils zwei Steuereingänge aufweisen, wobei die Eingänge des ersten (50), des zweiten (51) und des dritten (52) dieser Multivibratoren mit den Ausgängen (L1, L2) des ersten und des zweiten Komparators (26, 27), des ersten (26) und des dritten (28) Komparators, bzw. des zweiten (27) und des dritten (28) Komparators von den drei Komparatoren der Vergleichsmittel (17) verbunden sind.

6. System nach Anspruch 5, dadurch gekennzeichnet, daß es ferner wenigstens einen Zähler (56, 57) umfaßt, der einen Eingang aufweist, der mit dem Ausgang (L1) des zweiten Komparators (27), der der mittleren Zelle (3) entspricht, verbunden ist, um die Anzahl der von dem Ausgangssignal dieses Komparators erfahrenen Änderungen der logischen Zustände im Laufe der Datenaufnahme oder der vorläufigen Abtastung zu zählen.

7. System nach Anspruch 6, dadurch gekennzeichnet, daß die Ausgänge dieses Zählers mit dem Prozessor (10) mittels eines Registers (55) verbunden sind.

8. System nach Anspruch 7, dadurch gekennzeichnet, daß es ferner Adressierungsmittel (34) für den Multiplexer (14), den Analog/Digital-Umwandler (13), den Verstärker (16) mit programmierbarem Verstärkungsfaktor, und die Digital/Analog-Umwandler (20, 21, 22) der Register (48, 49, 55) aufweist.

9. System nach Anspruch 8, dadurch gekennzeichnet, daß es ferner wenigstens automatische Rückstellmittel (60) umfaßt, welche Ausgänge besitzen, die mit den Steuereingängen der Multivibratoren (50, 51, 52) und des Zählers (56, 57) verbunden sind, wobei die Eingänge dieser Rückstellmittel mit den Ausgängen der Adressierungsmittel (34) verbunden sind.

10. System nach Anspruch 9, dadurch gekennzeichnet, daß jede fotoempfindliche Zelle (2) einen Sender (95) für elektromagnetische Strahlung und einen fotoempfindlichen Empfänger (96) mit einem Ausgang (97) aufweist, der mit einem Eingang einer der Ausgangsverstärker verbunden ist.

11. System nach Anspruch 10, dadurch gekennzeichnet, daß der Sender (95) eine Lichtquelle (98) aufweist, die eine optische Faser (99) beleuchtet, die zu dem die aufzunehmenden Daten enthaltenden Bereich gerichtet ist, und daß der fotoempfindliche Empfänger (96) einen fotoempfindlichen Detektor (100) und eine optische Faser (101) umfaßt, die zu dem Detektor (100) die elektromagnetische Strahlung führt, die von dem die aufzunehmenden Daten enthaltenden Bereich reflektiert wird.

12. System nach Anspruch 9, dadurch gekennzeichnet, daß die fotoempfindlichen Zellen einen gemeinsamen Sender (102) für weiße Lichtstrahlung und drei für unterschiedliche Wellenlängen dieser Strahlung fotoempfindliche Empfänger (103) umfaßt.

13. System nach Anspruch 12, dadurch gekennzeichnet, daß der Sender eine weiße Strahlungsquelle (100) umfaßt, die eine zu dem die aufzunehmenden Daten enthaltenden Bereich gerichtete, optische Faser beleuchtet, daß die Empfänger jeweils einen fotoempfindlichen Detektor (103) und eine optische Faser (104) umfassen, die zu dem Detektor die von dem Bereich reflektierte Strahlung führt, und daß jeder Detektor (103) umschaltbaren, optischen Filtern (105) zugeordnet ist, die für die entsprechenden, unterschiedlichen Wellenlängen empfindlich sind.

14. System nach Anspruch 9, dadurch gekennzeichnet, daß die fotoempfindlichen Zellen wenigstens einen gemeinsamen Sender (95) umfassen, der selektiv Strahlung mit unterschiedlicher Wellenlänge aussenden kann, und daß jede fotoempfindliche Zelle einen Empfänger (96) aufweist, der für die unterschiedlichen Wellenlängen und Intensitäten dieser Strahlung empfindlich ist.

15. System nach Anspruch 14, dadurch gekennzeichnet, daß der Sender wenigstens eine Quelle (98) aufweist, die durch Umschalten Strahlung unterschiedlicher Wellenlänge aussenden kann, daß diese Quelle eine zu dem die aufzunehmenden Daten enthaltenden Bereich gerichtete, optische Faser (99) beleuchtet, und daß jeder Empfänger (96) einen für die unterschiedlichen Wellenlängen fotoempfindlichen Detektor (100) und eine optische Faser (101) aufweist, die von dem Bereich reflektierte Strahlung zu dem Detektor leitet.

16. System nach Anspruch 9, dadurch gekennzeichnet, daß der mit dem Prozessor (10) verbundene Speicher (11) ferner Steuerbefehle für die Mittel (8) zum Bewegen der opto-elektronischen Mittel als Funktion der Wörter mit binärem Wert enthält, die dem Prozessor durch die Codierungsmittel (29) geliefert wurden.

17. System nach Anspruch 13, dadurch gekennzeichnet, daß der mit dem Prozessor (10) verbundene Speicher (11) ferner Befehle zum Umschalten der Filter (105) enthält.

18. System nach Anspruch 15, dadurch gekennzeichnet, daß der mit dem Prozessor (10) verbundene Speicher (11) ferner Befehle zum Umschalten der Quelle (98) enthält.

19. System nach Anspruch 11, 13 oder 15, dadurch gekennzeichnet, daß den optischen Fasern Fokussierungsmittel (112) zugeordnet sind.

FIG. 1

0 097 555

FIG. 2

0 097 555

FIG. 3

0 097 555

FIG. 4A

0 097 555

FIG. 4 B

FIG. 5

6

FIG. 6

## FIG. 7

| | POSITION $X_i$ | | | POSITION $X_{i+1}$ | | |
|---|---|---|---|---|---|---|
| | $L_1$ | $L_2$ | $L_3$ | $L_1$ | $L_2$ | $L_3$ |
| LECTURE ETAT BINAIRE DE $L_1, L_2, L_3$ | 0 | 1 | 0 | 1 | 0 | 0 |
| TRANSITIONS | | | | ↗ | ↘ | RIEN |

VALEUR DU MOT LU PAR LE PROCESSEUR

TRANSITIONS          ETATS BINAIRES

| 0 | 1 | 0 | 1 | 0 | 0 | 1 | 0 | 0 |
|---|---|---|---|---|---|---|---|---|
| $L_3$↘ | $L_2$↘ | $L_1$↘ | $L_1$↗ | $L_2$↗ | $L_3$↗ | $L_1$ | $L_2$ | $L_3$ |

## FIG. 8

7

**0 097 555**

```
┌──────────────────────────┐
│    MULTIPLEXEUR 14       │
│   SELECTIONNE SIGNAL     │
│    SORTIE AMPLI 6        │
└──────────────────────────┘
              │
              ▼
┌──────────────────────────┐
│  POUR k=0→X,Y=POSITION   │
│   INITIALE DES MOYENS    │
│  OPTO-ELECTRONIQUES 1    │
│    ENSUITE POSITIONS     │
│       X + kΔX,Y          │
└──────────────────────────┘
              │
              ▼
┌──────────────────────────┐
│   ENREGISTREMENT DES     │
│  VALEURS Mk DE SORTIE    │
│  DU CONV. AN. NUM. 13    │
└──────────────────────────┘
              │
              ▼
┌──────────────────────────┐
│  RECHERCHE DE MA ET MI   │
│      DANS M(k)           │
└──────────────────────────┘
              │
              ▼
          ◇ k = kMax ? ◇ ──OUI──
              │ NON
              ▼
┌──────────────────────────┐
│     INCREMENTATION       │
│        k ← k + 1         │
└──────────────────────────┘

┌──────────────────────────┐
│    CALCUL VALEUR         │
│  NUMERIQUE MOYENNE       │
│   MM1 = f(MA, MI)        │
└──────────────────────────┘
              │
              ▼
┌──────────────────────────┐
│   CHARGEMENT DE MM1      │
│  DANS CONV. NUM. AN. 21  │
└──────────────────────────┘

┌──────────────────────────┐
│    MEMES OPERATIONS      │
│   POUR AMPLIF 5 ET 7     │
└──────────────────────────┘

┌──────────────────────────┐
│          FIN             │
└──────────────────────────┘
```

# FIG. 9

8

**0 097 555**

**FIG. 10**

```
┌─────────────────────────────┐
│  CELLULE 6 SUR COURBE C      │
│  COORDONNEES Xi, Yi          │
│  POSITION i                  │
└─────────────────────────────┘
              │
              ▼
┌─────────────────────────────┐
│  REMISE A ZERO               │
│  REGISTRES 48, 49            │
└─────────────────────────────┘
              │
              ▼
┌─────────────────────────────┐
│  POSITION i + 1. ABSCISSE    │
│  Xi' + ΔX = Xi, Yi + 1 = Yi  │
│  POUR CELLULE 6              │
└─────────────────────────────┘
```

CONSERVER VALEURS ENREGISTREES POUR POSITION i + 1

LECTURE DU MOT DE 3e.b CORRESPONDANT A L1, L2, L3

VALEUR NUMERIQUE DU MOT = 2 ?    OUI    Xi, Yi COORDONNEES FIN DE COURBE C ?    OUI

NON

SUIVANT VALEUR DU MOT COMPLET DANS REG. 48, 49 CALCUL DU DEPLACEMENT ΔY

FIN DE NUMERISATION

REMISE A ZERO DES REG. 48, 49

DEPLACEMENT ΔY

VALEUR NUMERIQUE DU MOT = 2 ?    OUI    CALCUL DU NOUVEL Yi

NON

NOUVEAU CALCUL DE ΔY

9

FIG. 11

FIG. 12